# EUROPEAN PATENT APPLICATION

(11) **EP 3 798 410 A1**
(43) Date of publication of application: **31.03.2021**
(21) Application number: 20188816.1
(22) Date of filing: 19.07.2012
(51) Int. Cl.: E21B 41/00, H01G 11/78, H01G 11/32, H01G 11/58

(54) **POWER SUPPLY FOR DOWNHOLE INSTRUMENTS**

(30) Priority: 27.07.2011 US 201161512090 P; 17.11.2011 US 201161560888 P; 09.12.2011 US 201161569010 P; 24.02.2012 US 201261602713 P; 02.04.2012 US 201261619203 P; 09.07.2012 WO PCT/US2012/045994
(62) Divisional of application: 12817809.2
(71) Applicant: FastCAP SYSTEMS Corporation, Boston, MA 02210 (US)
(72) Inventor: SIGNORELLI, Riccardo, The Woodlands, TX 77380 (US); COOLEY, John, Boston, Massachusetts 02129 (US); DEANE, Christopher, Boston, Massachusetts 02127 (US); EPSTEIN, James, Sharon, Massachusetts 02067 (US); KUTTIPILLAI, Padmanaban, East Lansing, Michigan 48823 (US); MARTINI, Fabrizio, Boston, Massachusetts 02127 (US); LANE, Joseph, Cambridge, Massachusetts 02139 (US)
(74) Representative: HGF

(57) **Abstract**

A power supply for a downhole instrument is provided. The power supply includes high temperature rechargeable energy storage, power generation capabilities and provides for operation in high temperature environments. A method of fabrication and use are provided.

## Description

### BACKGROUND OF THE INVENTION

### 1. Field of the Invention

The invention disclosed herein relates to exploration for oil and gas and other subterranean resources and, in particular, to a power supply for supplying power to instruments in a downhole environment.

### 2. Description of the Related Art

In the exploration for oil and gas, it is necessary to drill a wellbore into the Earth. While drilling of the wellbore permits individuals and companies to evaluate sub-surface materials and to extract desired hydrocarbons, many problems are encountered.

For example, it is well known that the "easy oil" is generally gone. Exploration now requires searching to greater depths than ever before. This necessitates drilling deeper and deeper, and thus into harsh environments, such as those having temperatures ranging from 200 degrees Celsius up to or in excess of 300 degrees Celsius. Generally, present day instrumentation is not built to operate in such an environment, and will fail well before reaching ambient temperatures within this range.

The growing complexity of downhole instrumentation further complicates this problem. That is, as technology continues to improve, exploration is making use of more instrumentation than ever before. With this usage comes an increased demand for power downhole.

Unfortunately, many of the known solutions have substantial drawbacks. For example, various types of batteries suffer catastrophic failure at elevated temperature, and can thus destroy instrumentation. Additionally, such batteries often are not rechargeable, as well as quite expensive.

What are needed are methods and apparatus to provide power downhole in environments that have temperatures ranging from ambient environmental temperatures up to about 200 degrees Celsius or higher, including up to about 300 degrees Celsius. Preferably, the methods and apparatus include generation capabilities as well as energy storage, and can thus provide for extended durations of operation in harsh environments. Further still, it would be preferable to have the solutions be economic to own and maintain.

### BRIEF SUMMARY OF THE INVENTION

In one embodiment, a power supply that is adapted for supplying power to a downhole tool is disclosed. The power supply includes an energy source coupled to a control circuit and a rechargeable energy storage that is configured to operate at a temperature within a temperature range between about 80 degrees Celsius to about 210 degrees Celsius. The source may include at least one of a battery, a connection to an external supply of electrical energy and a generator that is configured for translating energy experienced by the downhole tool into the electrical energy. The control circuit may be configured for receiving electrical energy from the source and storing the electrical energy in the energy storage.

In another embodiment, a method for fabricating a power supply for a downhole tool is disclosed. The method includes selecting at least one energy source, an rechargeable energy storage configured to operate at a temperature within a temperature range between about 80 degrees Celsius to about 210 degrees Celsius, and a control circuit adapted for receiving electrical energy from the generator and storing the electrical energy in the energy storage; and incorporating the source, control circuit and energy storage into the downhole tool to provide the power supply.

In yet another embodiment, a method for providing power with a downhole tool is disclosed. The method includes: selecting a tool that includes a power supply that comprises an energy source coupled to a control circuit and a high temperature rechargeable energy storage configured to operate at a temperature within a temperature range between about 80 degrees Celsius to about 210 degrees Celsius. The source includes at least one of a battery, a connection to an external supply of electrical energy and a generator that is configured for translating energy experienced by the downhole tool into the electrical energy. The control circuit may be configured for receiving electrical energy from the source and storing the electrical energy in the energy storage; and providing power from the power supply to a load with the tool downhole.

Features of the present disclosure are presented in the following non-limiting clauses, which are not to be interpreted as defining a scope of protection, being distinct from the claims appended later after the description.

### CLAUSES

1. A power supply adapted for supplying power to a downhole tool, the power supply comprising:
   an energy source coupled to a control circuit and a rechargeable energy storage that is configured to operate at a temperature within a temperature range between about 80 degrees Celsius to about 210 degrees Celsius;
   the source comprising at least one of a battery, a connection to an external supply of electrical energy and a generator that is configured for translating energy experienced by the downhole tool into the electrical energy, the control circuit for receiving electrical energy from the source and storing the electrical energy in the energy storage.
2. The power supply of clause 1, wherein the temperature range is between about 90 degrees Celsius to about 210 degrees Celsius.
3. The power supply of clause 1, wherein the temperature range is between about 80 degrees Celsius to about 150 degrees Celsius.
4. The power supply of clause 1, wherein the energy storage comprises an ultracapacitor.
5. The power supply of clause 4, wherein the ultracapacitor is operable in a sub-range within the temperature range, wherein the sub-range is about 10 degrees Celsius.
6. The power supply of clause 4, wherein an energy storage cell comprises a positive electrode and a negative electrode.
7. The power supply of clause 4, wherein at least one of the electrodes comprises a carbonaceous energy storage media.
8. The power supply of clause 7, wherein the carbonaceous energy storage media comprises carbon nanotubes.
9. The power supply of clause 7, wherein the carbonaceous energy storage media comprises at least one of activated carbon, carbon fibers, rayon, graphene, aerogel, carbon cloth, and a plurality of forms of carbon nanotubes.
10. The power supply of clause 7, wherein each electrode comprises a current collector.
11. The power supply of clause 1, wherein content of halide ions in electrolyte of the energy storage is less than about 1,000 parts per million.
12. The power supply of clause 1, wherein content of halide ions in electrolyte of the energy storage is less than about 500 parts per million.
13. The power supply of clause 1, wherein content of halide ions in electrolyte of the energy storage is less than about 100 parts per million.
14. The power supply of clause 1, wherein content of halide ions in electrolyte of the energy storage is less than about 50 parts per million.
15. The power supply of clause 1, wherein electrolyte of the energy storage comprises halide ions that comprise at least one of chloride, bromide, fluoride and iodide.
16. The power supply of clause 1, wherein electrolyte of the energy storage comprises a total concentration of metallic species that is less than about 1,000 parts per million.
17. The power supply of clause 16, wherein the metallic species comprise at least one of Br, Cd, Co, Cr, Cu, Fe, K, Li, Mo, Na, Ni, Pb, Zn, an alloy of any of the foregoing and an oxide of any of the foregoing.
18. The power supply of clause 1, wherein a total concentration of impurities in electrolyte of the energy storage is less than about 1,000 parts per million.
19. The power supply of clause 18, wherein the impurities comprise at least one of bromoethane, chloroethane, 1-bromobutane, 1-chlorobutane, 1-methylimidazole, ethyl acetate and methylene chloride.
20. The power supply of clause 1, wherein a total water content in electrolyte of the energy storage is less than about 500 parts per million.
21. The power supply of clause 1, wherein a total water content in electrolyte of the energy storage is less than about 100 parts per million.
22. The power supply of clause 1, wherein a total water content in electrolyte of the energy storage is less than about 50 parts per million.
23. The power supply of clause 1, wherein a total water content in electrolyte of the energy storage is less than about 20 parts per million.
24. The power supply of clause 1, wherein a cation in electrolyte of the energy storage is selected from the group comprising 1-(3-Cyanopropyl)-3-methylimidazolium, 1,2-Dimethyl-3 -propylimidazolium, 1,3-Bis(3-cyanopropyl)imidazolium, 1,3-Diethoxyimidazolium, 1-Butyl-1-methylpiperidinium, 1-Butyl-2,3-dimethylimidazolium, 1-Butyl-3-methylimidazolium, 1-Butyl-4-methylpyridinium, 1-Butylpyridinium, 1-Decyl-3-methylimidazolium, 1-Ethyl-3-methylimidazolium and 3-Methyl-1-propylpyridinium.
25. The power supply of clause 1, wherein a cation in electrolyte of the energy storage is selected from the group comprising ammonium, imidazolium, oxazolium, phosphonium, piperidinium, pyrazinium, pyrazinium, pyridazinium, pyridinium, pyrimidinium, pyrrolidinium, sulfonium, thiazolium, triazolium, guanidium, isoquinolinium, benzotriazolium, viologen-types, and functionalized imidazolium cations.
26. The power supply of clause 25, wherein at least one branch group (Rₓ) for the cation is selected from the groups comprising: alkyl, heteroalkyl, alkenyl, heteroalkenyl, alkynyl, heteroalkynyl, halo, amino, nitro, cyano, hydroxyl, sulfate, sulfonate and carbonyl groups.
27. The power supply of clause 26, wherein the alkyl is selected from the groups comprising: saturated aliphatic groups, straight-chain alkyl groups, branched-chain alkyl groups, cycloalkyl (alicyclic) groups, alkyl substituted cycloalkyl groups, and cycloalkyl substituted alkyl groups.
28. The power supply of clause 26, wherein the alkyl is selected from the group comprising: methyl, ethyl, propyl, butyl, pentyl, hexyl, ethyl hexyl, cyclopropyl, cyclobutyl, cyclopentyl and cyclohexyl.
29. The power supply of clause 26, wherein the heteroalkyl comprises an alkyl group that comprises at least one heteroatom.
30. The power supply of clause 29, wherein the heteroatom is selected from the group comprising oxygen, nitrogen and sulfur.
31. The power supply of clause 26, wherein the alkyl groups and the alkynyl groups comprise an aliphatic group.
32. The power supply of clause 26, wherein the aliphatic group comprises at least one of a double bond and a triple bond.
33. The power supply of clause 1, wherein electrolyte of the energy storage comprises an anion that is selected from the group comprising: -F⁻, -Cl⁻, -Br⁻, -I⁻, -OCH₃⁻, -CN⁻, - SCN⁻, -C₂H₃O₂⁻, -ClO⁻, -ClO₂⁻, -ClO₃⁻, -ClO₄⁻, -NCO⁻, -NCS⁻, -NCSe⁻, -NCN⁻, - OCH(CH₃)₂⁻, -CH₂OCH₃, -COOH⁻, -OH⁻, -SOCH₃⁻, -SO₂CH₃⁻, -SOCH₃⁻, -SO₂CF₃⁻, - SO₃H⁻, -SO₃CF₃⁻, -O(CF₃)₂C₂(CF₃)₂O⁻, -CF₃⁻, -CHF₂⁻, -CH₂F⁻, -CH₃⁻ -NO₃⁻, -NO₂⁻, - SO₃⁻, -SO₄²⁻, -SF₅⁻,-CB₁₁H₁₂⁻, -CB₁₁H₆C₁₆⁻, -CH₃CB₁₁H₁₁⁻ and -C₂H₅CB₁₁H₁₁⁻.
34. The power supply of clause 1, wherein electrolyte of the energy storage comprises an anion that is selected from the group comprising: A-PO₄⁻, -A-SO₂⁻, A-SO₃⁻, -A-SO₃H⁻, -A-COO⁻, -A-CO⁻; wherein A is one of a phenyl group, a substituted phenyl, an alkyl group, a substituted alkyl group, a negatively charged radical alkane, a halogenated alkane, and an ether.
35. The power supply of clause 1, wherein electrolyte of the energy storage comprises an anion that comprises a base structure bonded with a respective number of substitute groups.
36. The power supply of clause 35, wherein the base structure comprises one of N, O, CO, SO, Be, C, Mg, Ca, Ba, Ra, Au, B, Al, Ga, Th, In, P, S, Sb, As, N, Bi, Nb and Sb.
37. The power supply of clause 35, wherein the respective number of substitute groups is at least two.
38. The power supply of clause 37, wherein the substitute groups are one of diverse and repetitive.
39. The power supply of clause 1, wherein electrolyte of the energy storage comprises an anion that comprises a base structure (Y₂) and two substitute groups (α₂) bonded thereto.
40. The power supply of clause 1, wherein electrolyte of the energy storage comprises an anion that comprises a base structure (Y₂) and two substitute groups (α₂), the base structure (Y₂) selected from the group consisting of: N, O, CO and SO; and each of the two substitute groups (α₂) being selected from the group consisting of: -F⁻, -Cl⁻, - Br⁻, -I^{-,} -OCH₃⁻, -CN-, -SCN⁻, -C₂H₃O₂⁻, -ClO⁻, -ClO₂⁻, -ClO₃⁻, -ClO₄⁻, -NCO⁻, -NCS⁻, - NCSe⁻, -NCN⁻, -OCH(CH₃)₂⁻, -CH₂OCH₃⁻, -COOH⁻, -OH⁻, -SOCH₃⁻, -SO₂CH₃⁻, - SOCH₃⁻, -SO₂CF₃⁻, -SO₃H⁻, -SO₃CF₃⁻, -O(CF₃)₂C₂(CF₃)₂O⁻, -CF₃⁻, -CHF₂⁻, -CH₂F⁻, - CH₃⁻ -NO₃⁻, -NO₂⁻, -SO₃⁻, -SO₄²⁻, -SF₅⁻,-CB₁₁H₁₂⁻, -CB₁₁H₆C₁₆⁻, -CH₃CB₁₁H₁₁⁻ and - C₂H₅CB₁₁H₁₁⁻ and A-PO₄⁻, -A-SO₂⁻, A-SO₃⁻, -A-SO₃H⁻, -A-COO⁻, -A-CO⁻; wherein A is one of a phenyl group, a substituted phenyl, an alkyl group, a substituted alkyl group, a negatively charged radical alkane, a halogenated alkane, and an ether.
41. The power supply of clause 1, wherein electrolyte of the energy storage comprises an anion that comprises a base structure (Y₃) and three substitute groups (α₃) bonded thereto.
42. The power supply of clause 1, wherein electrolyte of the energy storage comprises an anion that comprises a base structure (Y₃) and three substitute groups (α₃), the base structure (Y₃) selected from the group consisting of: Be, C, N, O, Mg, Ca, Ba, Ra, Au; and each of the three substitute groups (α₃) being selected from the group consisting of: -F⁻, -Cl⁻, -Br-, -I⁻, -OCH₃⁻, -CN⁻, -SCN⁻, -C₂H₃O₂⁻, -ClO⁻, -ClO₂⁻, -ClO₃⁻, -ClO₄⁻, - NCO⁻, -NCS⁻, -NCSe⁻, -NCN⁻, -OCH(CH₃)₂⁻, -CH₂OCH₃⁻, -COOH⁻, -OH⁻, -SOCH₃⁻, - SO₂CH₃⁻, -SOCH₃⁻, -SO₂CF₃⁻, -SO₃H⁻, -SO₃CF₃⁻, -O(CF₃)₂C₂(CF₃)₂O⁻, -CF₃⁻, -CHF₂⁻, -CH₂F⁻, -CH₃⁻ -NO₃⁻, -NO₂⁻, -SO₃⁻, -SO₄²⁻, -SF₅⁻,-CB₁₁H₁₂⁻, -CB₁₁H₆C₁₆⁻, - CH₃CB₁₁H₁₁⁻ and -C₂H₅CB₁₁H₁₁⁻ and A-PO₄⁻, -A-SO₂⁻, A-SO₃⁻, -A-SO₃H⁻, -A-COO⁻, -A-CO⁻; wherein A is one of a phenyl group, a substituted phenyl, an alkyl group, a substituted alkyl group, a negatively charged radical alkane, a halogenated alkane, and an ether.
43. The power supply of clause 1, wherein electrolyte of the energy storage comprises an anion that comprises a base structure (Y₄) and four substitute groups (α₄) bonded thereto.
44. The power supply of clause 1, wherein electrolyte of the energy storage comprises an anion that comprises a base structure (Y₄) and four substitute groups (α₄), the base structure (Y₄) selected from the group consisting of: B, Al, Ga, Th, In, P; and each of the four substitute groups (α₄) being selected from the group consisting of: -F⁻, -Cl⁻, - Br⁻, -I^{-,} -OCH₃⁻, -CN⁻, -SCN⁻, -C₂H₃O₂⁻, -ClO⁻, -ClO₂⁻, -ClO₃⁻, -ClO₄⁻, -NCO⁻, -NCS⁻, - NCSe⁻, -NCN⁻, -OCH(CH₃)₂⁻, -CH₂OCH₃⁻, -COOH⁻, -OH⁻, -SOCH₃⁻, -SO₂CH₃⁻, - SOCH₃⁻, -SO₂CF₃⁻, -SO3H⁻, -SO₃CF₃⁻, -O(CF₃)₂C₂(CF₃)₂O⁻, -CF₃⁻, -CHF₂⁻, -CH₂F⁻, - CH₃⁻ -NO₃⁻, -NO₂⁻, -SO₃⁻, -SO₄²⁻, -SF₅⁻,-CB₁₁H₁₂⁻, -CB₁₁H₆C₁₆⁻, -CH₃CB₁₁H₁₁⁻ and - C₂H₅CB₁₁H₁₁⁻ and A-PO₄⁻, -A-SO₂⁻, A-SO₃⁻, -A-SO₃H⁻, -A-COO⁻, -A-CO⁻; wherein A is one of a phenyl group, a substituted phenyl, an alkyl group, a substituted alkyl group, a negatively charged radical alkane, a halogenated alkane, and an ether.
45. The power supply of clause 1, wherein electrolyte of the energy storage comprises an anion that comprises a base structure (Y₆) and six substitute groups (α6) bonded thereto.
46. The power supply of clause 1, wherein electrolyte of the energy storage comprises an anion that comprises a base structure (Y₆) and six substitute groups (α₆), the base structure (Y₆) selected from the group consisting of: P, S, Sb, As, N, Bi, Nb, Sb; and each of the six substitute groups (α₆) being selected from the group consisting of: -F⁻, -Cl⁻, -Br⁻, -I^{-,} -OCH₃⁻, -CN⁻, -SCN⁻, -C₂H₃O₂⁻, -ClO⁻, -ClO₂⁻, -ClO₃⁻, -ClO₄⁻, -NCO⁻, - NCS⁻, -NCSe⁻, -NCN⁻, -OCH(CH₃)₂⁻, -CH₂OCH₃⁻, -COOH⁻, -OH⁻, -SOCH₃⁻, - SO₂CH₃⁻, -SOCH₃⁻, -SO₂CF₃⁻, -SO₃H⁻, -SO₃CF₃⁻, -O(CF₃)₂C₂(CF₃)₂O⁻, -CF₃⁻, -CHF₂⁻, -CH₂F⁻, -CH₃⁻ -NO₃⁻, -NO₂⁻, -SO₃⁻, -SO₄²⁻, -SF₅⁻,-CB₁₁H₁₂⁻, -CB₁₁H₆C₁₆⁻, - CH₃CB₁₁H₁₁⁻ and -C₂H₅CB₁₁H₁₁⁻ and A-PO₄⁻, -A-SO₂⁻, A-SO₃⁻, -A-SO₃H⁻, -A-COO⁻, -A-CO⁻; wherein A is one of a phenyl group, a substituted phenyl, an alkyl group, a substituted alkyl group, a negatively charged radical alkane, a halogenated alkane, and an ether.
47. The power supply of clause 1, wherein electrolyte of the energy storage a solvent.
48. The power supply of clause 47, wherein the solvent comprises at least one of acetonitrile, an amide, benzonitrile, butyrolactone, cyclic ether, dibutyl carbonate, diethyl carbonate, diethylether, dimethoxyethane, dimethyl carbonate, dimethylformamide, dimethylsulfone, dioxane, dioxolane, ethyl formate, ethylene carbonate, ethylmethyl carbonate, lactone, linear ether, methyl formate, methyl propionate, methyltetrahydrofuran, nitrile, nitrobenzene, nitromethane, n-methylpyrrolidone, propylene carbonate, sulfolane, sulfone, tetrahydrofuran, tetramethylene sulfone, thiophene, ethylene glycol, diethylene glycol, triethylene glycol, polyethylene glycols, carbonic acid ester, γ-butyrolactone, nitrile and tricyanohexane.
49. The power supply of clause 1, wherein a housing for housing the energy storage comprises a barrier disposed over a substantial portion of interior surfaces thereof.
50. The power supply of clause 49, wherein the barrier comprises at least one of polytetrafluoroethylene (PTFE), perfluoroalkoxy (PFA), fluorinated ethylene propylene (FEP), ethylene tetrafluoroethylene (ETFE).
51. The power supply of clause 49, wherein the barrier comprises a ceramic material.
52. The power supply of clause 49, wherein the barrier comprises a material that exhibits at least one of corrosion resistance, a desired dielectric property, and a low electrochemical reactivity.
53. The power supply of clause 49, wherein the barrier comprises multiple layers of materials.
54. The power supply of clause 49, wherein the housing comprises a multilayer material.
55. The power supply of clause 54, wherein the multilayer material comprises a first material clad onto a second material.
56. The power supply of clause 54, wherein the multilayer material comprises at least one of steel, tantalum and aluminum.
57. The power supply of clause 49, wherein the housing comprises at least one hemispheric seal.
58. The power supply of clause 49, wherein the housing comprises at least one glass-to-metal seal.
59. The power supply of clause 58, wherein a pin of the glass-to-metal seal provides an electrical contact.
60. The power supply of clause 59, wherein the pin comprises one of an iron-nickel-cobalt alloy, a nickel iron alloy, tantalum, molybdenum, niobium, tungsten, a form of stainless and titanium.
61. The power supply of clause 59, wherein the glass-to-metal seal comprises a body that comprises at least one of nickel, molybdenum, chromium, cobalt, iron, copper, manganese, titanium, zirconium, aluminum, carbon, and tungsten and an alloy thereof.
62. The power supply of clause 1, wherein an energy storage cell of the energy storage comprises a separator to provide electrical separation between a positive electrode and a negative electrode.
63. The power supply of clause 62, wherein the separator comprises one of polyamide, polytetrafluoroethylene (PTFE), polyether ether ketone (PEEK), aluminum oxide (Al₂O₃), fiberglass and fiberglass reinforced plastic.
64. The power supply of clause 62, wherein the separator is substantially free of moisture.
65. The power supply of clause 62, wherein the separator is substantially hydrophobic.
66. The power supply of clause 1, wherein the energy storage comprises a hermetic seal that exhibits a leak rate that is no greater than about 5.0x10⁻⁶ atm-cc/sec.
67. The power supply of clause 1, wherein the energy storage comprises a hermetic seal that exhibits a leak rate that is no greater than about 5.0x10⁻⁷ atm-cc/sec.
68. The power supply of clause 1, wherein the energy storage comprises a hermetic seal that exhibits a leak rate that is no greater than about 5.0x10⁻⁸ atm-cc/sec.
69. The power supply of clause 1, wherein the energy storage comprises a hermetic seal that exhibits a leak rate that is no greater than about 5.0x10⁻⁹ atm-cc/sec.
70. The power supply of clause 1, wherein the energy storage comprises a hermetic seal that exhibits a leak rate that is no greater than about 5.0x10⁻¹⁰ atm-cc/sec.
71. The power supply of clause 1, wherein a volumetric leakage current of the energy storage is less than about 1,000 mAmp per Liter within the temperature range.
72. The power supply of clause 1, wherein a volumetric leakage current of the energy storage is less than about 1,000 mAmp per Liter over a specified voltage range.
73. The power supply of clause 1, wherein the energy storage comprises at least one battery in addition to the rechargeable energy storage.
74. The power supply of clause 73, wherein the battery is not rechargeable.
75. The power supply of clause 1, further comprising a plurality of generators, each generator oriented to harvest vibrational energy of a particular direction.
76. The power supply of clause 1, further comprising a shield to at least one of reduce and substantially eliminate an external magnetic field.
77. The power supply of clause 1, further comprising circuitry for providing power generation from using the energy storage as a power source.
78. The power supply of clause 77, wherein the power generated comprises one of alternating current (AC) and direct current (DC).
79. The power supply of clause 1, wherein the generator comprises a vibrational energy generator.
80. The power supply of clause 79, wherein the generator comprises at least one adjustable biasing device.
81. The power supply of clause 80, wherein the at least one adjustable biasing device comprises one of an adjustable magnet, an electromagnet, a piezoelectric element and a tunable spring element.
82. The power supply of clause 80, further comprising at least one tuning circuit for controlling the at least one adjustable biasing device.
83. The power supply of clause 80, wherein the at least one tuning circuit comprises a microprocessor.
84. The power supply of clause 1, wherein the generator comprises at least one of a rotary generator, an electromagnetic displacement generator, a magnetostrictive displacement generator, a piezoelectric generators, a thermoelectric generator, a thermophotovoltaic generator, and a radioisotope energy generator.
85. The power supply of clause 1, wherein the battery comprises at least one of a lithium-thionyl-chloride battery, a lithium-bromine-chloride battery, a lithium-sulfuryl-chloride battery, and a fused salt battery.
86. The power supply of clause 1, wherein the external supply comprises a connection with a remote electrical energy source, the connection comprising one of a wireline connection, a wired casing connection, a wired pipe connection and a coiled tubing connection.
87. A method for fabricating a power supply for a downhole tool, the method comprising:
   selecting at least one energy source, an rechargeable energy storage configured to operate at a temperature within a temperature range between about 80 degrees Celsius to about 210 degrees Celsius, and a control circuit adapted for receiving electrical energy from the generator and storing the electrical energy in the energy storage; and
   incorporating the source, control circuit and energy storage into the downhole tool to provide the power supply.
88. The method as in clause 87, wherein the source comprises at least one of a battery, a connection to an external supply of electrical energy and a generator that is configured for translating energy experienced by the downhole tool into the electrical energy.
89. The method as in clause 87, further comprising incorporating a plurality of energy generators into the power supply, each of the generators oriented to harvest vibrational energy of a predetermined direction.
90. The method as in clause 87, wherein selecting comprises selecting at least one of a rotary generator, an electromagnetic displacement generator, a magnetostrictive displacement generator, a piezoelectric generators, a thermoelectric generator, a thermophotovoltaic generator, a connection to a remote power supply and a radioisotope energy generator.
91. The method as in clause 87, wherein selecting comprises selecting at least one of a battery and a connection to an external energy supply.
92. The method as in clause 87, further comprising incorporating shielding into at least one of the power supply and the downhole tool to at least one of reduce and substantially eliminate interfering magnetic fields.
93. The method as in clause 87, further comprising selecting at least one of the energy generator and the control circuit for operation within the temperature range.
94. The method as in clause 87, further comprising incorporating a circuit to provide power generation from the energy storage to a load.
95. The method as in clause 87, wherein selecting the energy storage comprises selecting an ultracapacitor that comprises an energy storage cell and an electrolyte within an hermetically sealed housing, the cell electrically coupled to a positive contact and a negative contact, wherein the ultracapacitor is configured to operate at a temperature within a temperature range between about 80 degrees Celsius to about 210 degrees Celsius.
96. A method for providing power with a downhole tool, the method comprising:
   selecting a tool that comprises a power supply that comprises an energy source coupled to a control circuit and a high temperature rechargeable energy storage configured to operate at a temperature within a temperature range between about 80 degrees Celsius to about 210 degrees Celsius, the source comprising at least one of a battery, a connection to an external supply of electrical energy and a generator that is configured for translating energy experienced by the downhole tool into the electrical energy, the control circuit for receiving electrical energy from the source and storing the electrical energy in the energy storage; and
   providing power from the power supply to a load with the tool downhole.
97. The method of clause 96, wherein the translating comprises operating at least one of a vibrational energy generator, a rotary generator, an electromagnetic displacement generator, a magnetostrictive displacement generator, a piezoelectric generators, a thermoelectric generator, a thermophotovoltaic generator, a connection to a remote power supply and a radioisotope energy generator.
98. The method of clause 96, wherein the load comprises at least one of electronic circuitry, a transformer, an amplifier, a servo, a processor, data storage, a pump, a motor, a sensor, a thermally tunable sensor, an optical sensor, a transducer, fiber optics, a light source, a scintillator, a pulser, a hydraulic actuator, an antenna, a single channel analyzer, a multi-channel analyzer, a radiation detector, an accelerometer and a magnetometer.
99. The method of clause 96, wherein the tool comprises at least one of a coring tool, a shut-in tool, a nuclear magnetic resonance imaging (NMR) tool, an electromagnetic (EM) telemetry tool, a mud-pulser telemetry tool, a resistivity measuring tool, a gamma sensing tool, a pressure sensor tool, an acoustic sensor tool, a seismic tool, a nuclear tool, a pulsed neutron tool, a formation sampling tool and an induction tool.
100. The method of clause 96, wherein the providing comprises at least one of continuously and periodically providing the power.
101. The method of clause 96, wherein the providing comprises at least one of providing alternating current (AC) and providing direct current (DC) to the load.
102. The method of clause 96, further comprising, for the vibrational energy generator, tuning the generator to a frequency of vibrations experienced downhole.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 illustrates an exemplary embodiment of a drill string that includes a logging instrument;
FIG. 2 illustrates an exemplary embodiment for well logging with an instrument deployed by a wireline;
FIG. 3 illustrates aspects of an exemplary ultracapacitor;
FIG. 4 depicts embodiments of primary structures for cations that may be included in the exemplary ultracapacitor;
FIG. 5 depicts an embodiment of a housing for the exemplary ultracapacitor;
FIG. 6 illustrates an embodiment of a storage cell for the exemplary capacitor;
FIG. 7 depicts a barrier disposed on an interior portion of a body of the housing;
FIGS. 8A and 8B, collectively referred to herein as FIG. 8, depict aspects of a cap for the housing;
FIG. 9 depicts assembly of the ultracapacitor according to the teachings herein;
FIGS. 10A and 10B, collectively referred to herein as FIG. 10, are graphs depicting performance for the ultracapacitor for an embodiment without a barrier and a similar embodiment that includes the barrier, respectively;
FIG. 11 depicts the barrier disposed about the storage cell as a wrapper;
FIGS. 12A, 12B and 12C, collectively referred to herein as FIG. 12, depict embodiments of the cap that include multi-layered materials;
FIG. 13 is a cross-sectional view of an electrode assembly that includes a glass-to-metal seal;
FIG. 14 is a cross-sectional view of the electrode assembly of FIG. 13 installed in the cap of FIG. 12B;
FIG. 15 depicts an arrangement of the energy storage cell in process of assembly;
FIGS. 16A, 16B and 16C, collectively referred to herein as FIG. 16, depict embodiments of an assembled energy storage cell;
FIG. 17 depicts use of polymeric insulation over the electrode assembly;
FIGS. 18A, 18B and 18C, collectively referred to herein as FIG. 18, depict aspects of a template for another embodiment of the cap for the energy storage;
FIG. 19 is a perspective view of an electrode assembly that includes hemispherically shaped material;
FIG. 20 is a perspective view of a cap including the electrode assembly of FIG. 19 installed in the template of FIG. 18C;
FIG. 21 is a cross-sectional view of the cap of FIG. 20;
FIG. 22 is a transparent isometric view of the energy storage cell disposed in a cylindrical housing;
FIG. 23 is an isometric view of an embodiment of the energy storage cell prior to being rolled into a rolled storage cell;
FIG. 24 is a side view of the storage cell, showing the various layers of one embodiment;
FIG. 25 is an isometric view of a rolled storage cell which includes a reference mark for placing a plurality of leads;
FIG. 26 is an isometric view of the storage cell of FIG. 25 with reference marks prior to being rolled;
FIG. 27 depicts the rolled up storage cell with the plurality of leads included;
FIG. 28 depicts a Z-fold imparted into aligned leads (i.e., a terminal) coupled to the storage cell;
FIGS. 29 - 37 are graphs depicting aspects of performance for exemplary ultracapacitors;
FIG. 38 depicts an embodiment of a power supply that includes the generator and the ultracapacitor;
FIG. 39 depicts aspects of an embodiment of a displacement generator;
FIG. 40 depicts an embodiment of a plurality of the generators depicted in FIG. 39 installed in a logging instrument; and
FIGS. 41 - 47 depict embodiments of control circuits for the power supply.

### DETAILED DESCRIPTION OF THE INVENTION

Disclosed herein are various configurations of a power supply adapted for use in a downhole environment. The power supply provides users with power generation in a high temperature environment. In order to provide context for the power supply, some background information and definitions are provided.

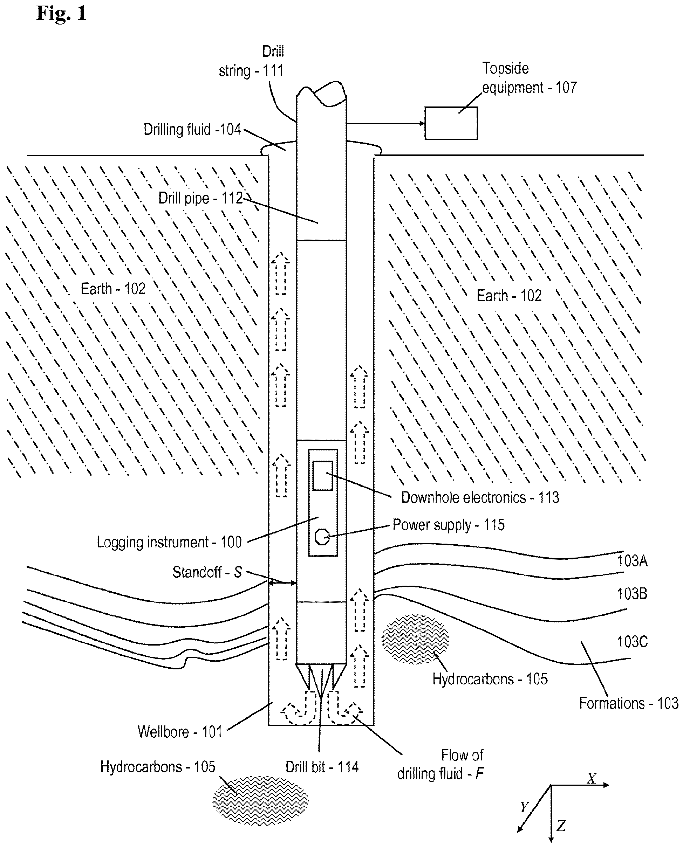

Refer now to FIG. 1 where aspects of an apparatus for drilling a wellbore 101 (also referred to as a "borehole") are shown. As a matter of convention, a depth of the wellbore 101 is described along a Z-axis, while a cross-section is provided on a plane described by an X-axis and a *Y*-axis.

In this example, the wellbore 101 is drilled into the Earth 102 using a drill string 111 driven by a drilling rig (not shown) which, among other things, provides rotational energy and downward force. The wellbore 101 generally traverses sub-surface materials, which may include various formations 103 (shown as formations 103A, 103B, 103C). One skilled in the art will recognize that the various geologic features as may be encountered in a subsurface environment may be referred to as "formations," and that the array of materials down the borehole (i.e., downhole) may be referred to as "sub-surface materials." That is, the formations 103 are formed of sub-surface materials. Accordingly, as used herein, it should be considered that while the term "formation" generally refers to geologic formations, and "sub-surface material," includes any materials, and may include materials such as solids, fluids, gases, liquids, and the like.

In this example, the drill string 111 includes lengths of drill pipe 112 which drive a drill bit 114. The drill bit 114 also provides a flow of a drilling fluid 104, such as drilling mud. The drilling fluid 104 is often pumped to the drill bit 114 through the drill pipe 112, where the fluid exits into the wellbore 101. This results in an upward flow, *F*, of drilling fluid 104 within the wellbore 101. The upward flow, *F*, generally cools the drill string 111 and components thereof, carries away cuttings from the drill bit 114 and prevents blowout of pressurized hydrocarbons 105.

The drilling fluid 104 (also referred to as "drilling mud") generally includes a mixture of liquids such as water, drilling fluid, mud, oil, gases, and formation fluids as may be indigenous to the surroundings. Although drilling fluid 104 may be introduced for drilling operations, use or the presence of the drilling fluid 104 is neither required for nor necessarily excluded from well logging operations. Generally, a layer of materials will exist between an outer surface of the drill string 111 and a wall of the wellbore 101. This layer is referred to as a "standoff layer," and includes a thickness, referred to as "standoff, S."

The drill string 111 generally includes equipment for performing "measuring while drilling" (MWD), also referred to as "logging while drilling" (LWD). Performing MWD or LWD generally calls for operation of a logging instrument 100 that in incorporated into the drill string 111 and designed for operation while drilling. Generally, the logging instrument 100 for performing MWD is coupled to an electronics package which is also on board the drill string 111, and therefore referred to as "downhole electronics 113." Generally, the downhole electronics 113 provides for at least one of operational control and data analysis. Often, the logging instrument 100 and the downhole electronics 113 are coupled to topside equipment 107. The topside equipment 107 may be included to further control operations, provide greater analysis capabilities as well as data logging and the like. A communications channel (not shown) may provide for communications to the topside equipment 107, and may operate via pulsed mud, wired pipe, and other technologies as are known in the art.

Generally, data from the MWD apparatus provide users with enhanced capabilities. For example, data made available from MWD evolutions may be useful as inputs to geosteering (i.e., steering the drill string 111 during the drilling process) and the like.

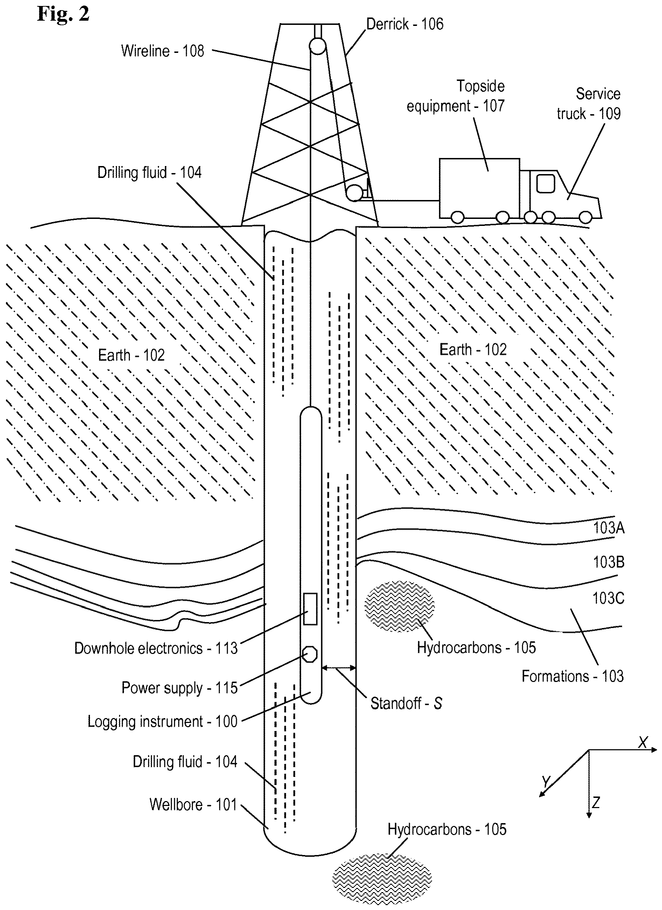

Referring now to FIG. 2, an exemplary logging instrument 100 for wireline logging of the wellbore 101 is shown. As a matter of convention, a depth of the wellbore 101 is described along a Z-axis, while a cross-section is provided on a plane described by an X-axis and a *Y*-axis. Prior to well logging with the logging instrument 100, the wellbore 101 is drilled into the Earth 102 using a drilling apparatus, such as the one shown in FIG. 1.

In some embodiments, the wellbore 101 has been filled, at least to some extent, with drilling fluid 104. The drilling fluid 104 (also referred to as "drilling mud") generally includes a mixture of liquids such as water, drilling fluid, mud, oil, gases, and formation fluids as may be indigenous to the surroundings. Although drilling fluid 104 may be introduced for drilling operations, use or the presence of the drilling fluid 104 is neither required for nor necessarily excluded from logging operations during wireline logging. Generally, a layer of materials will exist between an outer surface of the logging instrument 100 and a wall of the wellbore 101. This layer is referred to as a "standoff layer," and includes a thickness, referred to as "standoff, S."

Generally, the logging instrument 100 is lowered into the wellbore 101 using a wireline 108 deployed by a derrick 106 or similar equipment. Generally, the wireline 108 includes suspension apparatus, such as a load bearing cable, as well as other apparatus. The other apparatus may include a power supply, a communications link (such as wired or optical) and other such equipment. Generally, the wireline 108 is conveyed from a service truck 109 or other similar apparatus (such as a service station, a base station, etc,...). Often, the wireline 108 is coupled to topside equipment 107. The topside equipment 107 may provide power to the logging instrument 100, as well as provide computing and processing capabilities for at least one of control of operations and analysis of data.

Generally, the logging instrument 100 includes a power supply 115. The power supply 115 may provide power to downhole electronics 113 (i.e., power consuming devices) as appropriate. Generally, the downhole electronics 113 provide measurements, perform sampling, as well as any other sequences desired to locate, ascertain and qualify a presence of hydrocarbons 105.

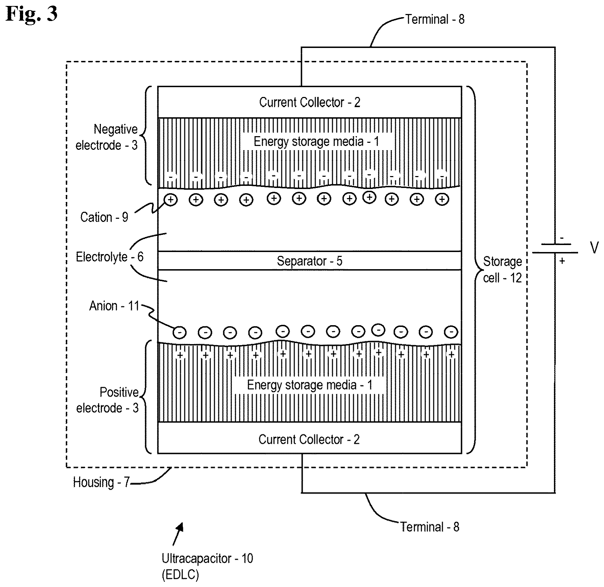

As an overview, the power supply 115 generally includes electrical storage and a generator for generating electrical output. The energy storage may include any type of technology practicable. In various embodiments, the energy storage includes at least one ultracapacitor (which is described below with reference to FIG. 3). Generally, in each instance, the energy storage provides a High Temperature Rechargeable Energy Storage (HTRES). In some embodiments, the HTRES is configured for operation at a temperature that is within a temperature range of between about 80 degrees Celsius to about 210 degrees Celsius.

Additional embodiments of HTRES include, without limitation, chemical batteries, for instance aluminum electrolytic capacitors, tantalum capacitors, ceramic and metal film capacitors, hybrid capacitors magnetic energy storage, for instance, air core or high temperature core material inductors. Other types of that may also be suitable include, for instance, mechanical energy storage devices, such as fly wheels, spring systems, spring-mass systems, mass systems, thermal capacity systems (for instance those based on high thermal capacity liquids or solids or phase change materials), hydraulic or pneumatic systems. One example is the high temperature hybrid capacitor available from Evans Capacitor Company Providence, RI USA part number HC2D060122 DSCC10004-16 rated for 125 degrees Celsius. Another example is the high temperature tantalum capacitor available from Evans Capacitor Company Providence, RI USA part number HC2D050152HT rated to 200 degrees Celsius. Yet another example is an aluminum electrolytic capacitor available from EPCOS Munich, Germany part number B41691A8107Q7, which is rated to 150 degrees Celsius. Yet another example is the inductor available from Panasonic Tokyo, Japan part number ETQ-P5M470YFM rated for 150 degrees Celsius. Additional embodiments are available from Saft, Bagnolet, France (part number Li-ion VL 32600-125) operating up to 125 degrees Celsius with 30 charge-discharge cycles, as well as a li-ion battery (experimental) operable up to about 250 degrees Celsius, and in experimental phase with Sadoway, Hu, of Solid Energy in Cambridge, Massachusetts.

As a matter of discussion, embodiments of the power supply 115 discussed herein involve use of a high temperature ultracapacitor, however, this is not limiting of technologies that may be included in the energy storage of the power supply 115. Exemplary aspects of an ultracapacitor suited for use as the high temperature energy storage are now introduced.

Disclosed herein is a capacitor that provides users with improved performance over a wide range of temperatures. For example, the capacitor may be operable at temperatures ranging from about as low as minus 40 degrees Celsius to as high as about 210 degrees Celsius. In some embodiments, the capacitor is operable temperatures ranging from about 80 degrees Celsius to as high as about 210 degrees Celsius.

In general, the capacitor includes energy storage media that is adapted for providing high power density and high energy density when compared to prior art devices. The capacitor includes components that are configured for ensuring operation over the temperature range, and includes any one or more of a variety of forms of electrolyte that are likewise rated for the temperature range. The combination of construction, energy storage media and electrolyte result in capabilities to provide robust operation under extreme conditions. To provide some perspective, aspects of an exemplary embodiment are now introduced.

As shown in FIG. 3, an exemplary embodiment of a capacitor is shown. In this case, the capacitor is an "ultracapacitor 10." The exemplary ultracapacitor 10 is an electric double-layer capacitor (EDLC). The EDLC includes at least one pair of electrodes 3 (where the electrodes 3 may be referred to individually as one of a "negative electrode 3" and a "positive electrode 3," however, this is merely for purposes of referencing herein). When assembled into the ultracapacitor 10, each of the electrodes 3 presents a double layer of charge at an electrolyte interface. In some embodiments, a plurality of electrodes 3 is included (for example, in some embodiments, at least two pairs of electrodes 3 are included). For purposes of discussion, only one pair of electrodes 3 are shown. As a matter of convention herein, at least one of the electrodes 3 uses a carbon-based energy storage media 1 (as discussed further herein) to provide energy storage. However, for purposes of discussion herein, it is generally assumed that each of the electrodes includes the carbon-based energy storage media 1. It should be noted that an electrolytic capacitor differs from an ultracapacitor because, in an electrolytic capacitor, the metallic electrodes typically differ greatly (at least an order of magnitude) in area.

Each of the electrodes 3 includes a respective current collector 2 (also referred to as a "charge collector"). In some embodiments, the electrodes 3 are separated by a separator 5. In general, the separator 5 is a thin structural material (usually a sheet) used to separate the negative electrode 3 from the positive electrode 3. The separator 5 may also serve to separate pairs of the electrodes 3. Once assembled, the electrodes 3 and the separator 5 provide a storage cell 12. Note that, in some embodiments, the carbon-based energy storage media 1 may not be included on one or both of the electrodes 3. That is, in some embodiments, a respective electrode 3 might consist of only the current collector 2. The material used to provide the current collector 2 could be roughened, anodized or the like to increase a surface area thereof. In these embodiments, the current collector 2 alone may serve as the electrode 3. With this in mind, however, as used herein, the term "electrode 3" generally refers to a combination of the energy storage media 1 and the current collector 2 (but this is not limiting, for at least the foregoing reason).

At least one form of electrolyte 6 is included in the ultracapacitor 10. The electrolyte 6 fills void spaces in and between the electrodes 3 and the separator 5. In general, the electrolyte 6 is a substance that disassociates into electrically charged ions. A solvent that dissolves the substance may be included in some embodiments of the electrolyte 6, as appropriate. The electrolyte 6 conducts electricity by ionic transport.

Generally, the storage cell 12 is formed into one of a wound form or prismatic form which is then packaged into a cylindrical or prismatic housing 7. Once the electrolyte 6 has been included, the housing 7 may be hermetically sealed. In various examples, the package is hermetically sealed by techniques making use of laser, ultrasonic, and/or welding technologies. In addition to providing robust physical protection of the storage cell 12, the housing 7 is configured with external contacts to provide electrical communication with respective terminals 8 within the housing 7. Each of the terminals 8, in turn, provides electrical access to energy stored in the energy storage media 1, generally through electrical leads which are coupled to the energy storage media 1.

As discussed herein, "hermetic" refers to a seal whose quality (i.e., leak rate) is defined in units of "atm-cc/second," which means one cubic centimeter of gas (e.g., He) per second at ambient atmospheric pressure and temperature. This is equivalent to an expression in units of "standard He-cc/sec." Further, it is recognized that 1 atm-cc/sec is equal to 1.01325 mbar-liter/sec. Generally, the ultracapacitor 10 disclosed herein is capable of providing a hermetic seal that has a leak rate no greater than about 5.0x10⁻⁶ atm-cc/sec, and may exhibit a leak rate no higher than about 5.0x10⁻¹⁰ atm-cc/sec. It is also considered that performance of a successfully hermetic seal is to be judged by the user, designer or manufacturer as appropriate, and that "hermetic" ultimately implies a standard that is to be defined by a user, designer, manufacturer or other interested party.

Leak detection may be accomplished, for example, by use of a tracer gas. Using tracer gas such as helium for leak testing is advantageous as it is a dry, fast, accurate and nondestructive method. In one example of this technique, the ultracapacitor 10 is placed into an environment of helium. The ultracapacitor 10 is subjected to pressurized helium. The ultracapacitor 10 is then placed into a vacuum chamber that is connected to a detector capable of monitoring helium presence (such as an atomic absorption unit). With knowledge of pressurization time, pressure and internal volume, the leak rate of the ultracapacitor 10 may be determined.

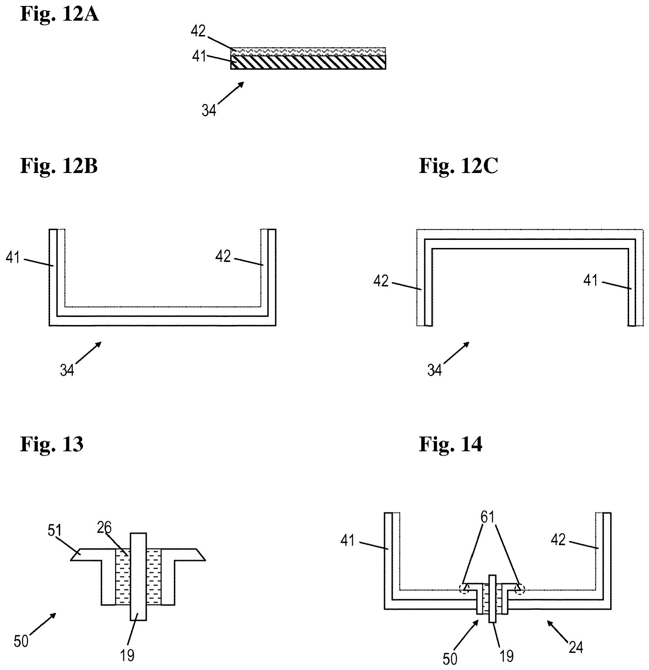

In some embodiments, at least one lead (which may also be referred to herein as a "tab") is electrically coupled to a respective one of the current collectors 2. A plurality of the leads (accordingly to a polarity of the ultracapacitor 10) may be grouped together and coupled to into a respective terminal 8. In turn, the terminal 8 may be coupled to an electrical access, referred to as a "contact" (e.g., one of the housing 7 and an external electrode (also referred to herein for convention as a "feed-through" or "pin")). Reference may be had to FIGS. 13, 14 and 15. Consider now the energy storage media 1 in greater detail.

In the exemplary ultracapacitor 10, the energy storage media 1 is formed of carbon nanotubes. The energy storage media 1 may include other carbonaceous materials including, for example, activated carbon, carbon fibers, rayon, graphene, aerogel, carbon cloth, and a plurality of forms of carbon nanotubes. Activated carbon electrodes can be manufactured, for example, by producing a carbon base material by carrying out a first activation treatment to a carbon material obtained by carbonization of a carbon compound, producing a formed body by adding a binder to the carbon base material, carbonizing the formed body, and finally producing an active carbon electrode by carrying out a second activation treatment to the carbonized formed body. Carbon fiber electrodes can be produced, for example, by using paper or cloth pre-form with high surface area carbon fibers.

In an exemplary method for fabricating carbon nanotubes, an apparatus for producing an aligned carbon-nanotube aggregate includes apparatus for synthesizing the aligned carbon-nanotube aggregate on a base material having a catalyst on a surface thereof. The apparatus includes a formation unit that processes a formation step of causing an environment surrounding the catalyst to be an environment of a reducing gas and heating at least either the catalyst or the reducing gas; a growth unit that processes a growth step of synthesizing the aligned carbon-nanotube aggregate by causing the environment surrounding the catalyst to be an environment of a raw material gas and by heating at least either the catalyst or the raw material gas; and a transfer unit that transfers the base material at least from the formation unit to the growth unit. A variety of other methods and apparatus may be employed to provide the aligned carbon-nanotube aggregate.

In some embodiments, material used to form the energy storage media 1 may include material other than pure carbon (and the various forms of carbon as may presently exist or be later devised). That is, various formulations of other materials may be included in the energy storage media 1. More specifically, and as a non-limiting example, at least one binder material may be used in the energy storage media 1, however, this is not to suggest or require addition of other materials (such as the binder material). In general, however, the energy storage media 1 is substantially formed of carbon, and may therefore referred to herein as a "carbonaceous material," as a "carbonaceous layer" and by other similar terms. In short, although formed predominantly of carbon, the energy storage media 1 may include any form of carbon (as well as any additives or impurities as deemed appropriate or acceptable) to provide for desired functionality as energy storage media 1.

In one set of embodiments, the carbonaceous material includes at least about 60% elemental carbon by mass, and in other embodiments at least about 75%, 85%, 90%, 95% or 98% by mass elemental carbon.

Carbonaceous material can include carbon in a variety forms, including carbon black, graphite, and others. The carbonaceous material can include carbon particles, including nanoparticles, such as nanotubes, nanorods, graphene sheets in sheet form, and/or formed into cones, rods, spheres (buckyballs) and the like.

Some embodiments of various forms of carbonaceous material suited for use in energy storage media 1 are provided herein as examples. These embodiments provide robust energy storage and are well suited for use in the electrode 3. It should be noted that these examples are illustrative and are not limiting of embodiments of carbonaceous material suited for use in energy storage media 1.

In general, the term "electrode" refers to an electrical conductor that is used to make contact to another material which is often non-metallic, in a device that may be incorporated into an electrical circuit. Generally, the term "electrode," as used herein, is with reference to the current collector 2 and the additional components as may accompany the current collector 2 (such as the energy storage media 1) to provide for desired functionality (for example, the energy storage media 1 which is mated to the current collector 2 to provide for energy storage and energy transmission).

Turning to the current collector 2, in some embodiments, the current collector 2 is between about 0.5 micrometers (µm) to about 25 micrometers (µm) thick. In some embodiments, the the current collector 2 is between about 20 micrometers (µm) to about 40 micrometers (µm) thick. The current collector 2 may appear as a thin layer, such as layer that is applied by chemical vapor deposition (CVD), sputtering, e-beam, thermal evaporation or through another suitable technique. Generally, the current collector 2 is selected for its properties such as conductivity, being electrochemically inert and compatible with the energy storage media 1 (e.g., CNT). Some exemplary materials include aluminum, platinum, gold, tantalum, titanium, and may include other materials as well as various alloys.

Once the current collector 2 is joined with the energy storage media 1 (e.g., CNT), an electrode element 15 is realized. Each electrode element 15 may be used individually as the electrode 3, or may be coupled to at least another electrode element 15 to provide for the electrode 3.

The separator 5 may be fabricated from various materials. In some embodiments, the separator 5 is non-woven glass. The separator 5 may also be fabricated from fiberglass, ceramics and flouro-polymers, such as polytetrafluoroethylene (PTFE), commonly marketed as TEFLON™ by DuPont Chemicals of Wilmington, DE. For example, using non-woven glass, the separator 5 can include main fibers and binder fibers each having a fiber diameter smaller than that of each of the main fibers and allowing the main fibers to be bonded together.

For longevity of the ultracapacitor 10 and to assure performance at high temperature, the separator 5 should have a reduced amount of impurities and in particular, a very limited amount of moisture contained therein. In particular, it has been found that a limitation of about 200 ppm of moisture is desired to reduce chemical reactions and improve the lifetime of the ultracapacitor 10, and to provide for good performance in high temperature applications. Some embodiments of materials for use in the separator 5 include polyamide, polytetrafluoroethylene (PTFE), polyetheretherketone (PEEK), aluminum oxide (Al₂O₃), fiberglass, and glass-reinforced plastic (GRP).

In general, materials used for the separator 5 are chosed according to moisture content, porosity, melting point, impurity content, resulting electrical performance, thickness, cost, availability and the like. In some embodiments, the separator 5 is formed of hydrophobic materials.

Accordingly, procedures may be employed to ensure excess moisture is eliminated from each separator 5. Among other techniques, a vacuum drying procedure may be used.

Note that, in some embodiments, the ultracapacitor 10 does not require or include the separator 5. For example, in some embodiments, such as where the electrodes 3 are assured of physical separation by geometry of construction, it suffices to have electrolyte 6 alone between the electrodes 3. More specifically, and as an example of physical separation, one such ultracapacitor 10 may include electrodes 3 that are disposed within a housing such that separation is assured on a continuous basis. A bench-top example would include an ultracapacitor 10 provided in a beaker.

The ultracapacitor 10 may be embodied in several different form factors (i.e., exhibit a certain appearance). Examples of potentially useful form factors include, a cylindrical cell, an annular or ring-shaped cell, a flat prismatic cell or a stack of flat prismatic cells comprising a box-like cell, and a flat prismatic cell that is shaped to accommodate a particular geometry such as a curved space. A cylindrical form factor may be most useful in conjunction with a cylindrical tool or a tool mounted in a cylindrical form factor. An annular or ring-shaped form factor may be most useful in conjunction with a tool that is ring-shaped or mounted in a ring-shaped form factor. A flat prismatic cell shaped to accommodate a particular geometry may be useful to make efficient use of "dead space" (i.e., space in a tool or equipment that is otherwise unoccupied, and may be generally inaccessible).

While generally disclosed herein in terms of a "jelly roll" application (i.e., a storage cell 12 that is configured for a cylindrically shaped housing 7), the rolled storage cell 23 may take any form desired. For example, as opposed to rolling the storage cell 12, folding of the storage cell 12 may be performed to provide for the rolled storage cell 23. Other types of assembly may be used. As one example, the storage cell 12 may be a flat cell, referred to as a "coin type" of cell. Accordingly, rolling is merely one option for assembly of the rolled storage cell 23. Therefore, although discussed herein in terms of being a "rolled storage cell 23", this is not limiting. It may be considered that the term "rolled storage cell 23" generally includes any appropriate form of packaging or packing the storage cell 12 to fit well within a given design of the housing 7.

Various forms of the ultracapacitor 10 may be joined together. The various forms may be joined using known techniques, such as welding contacts together, by use of at least one mechanical connector, by placing contacts in electrical contact with each other and the like. A plurality of the ultracapacitors 10 may be electrically connected in at least one of a parallel and a series fashion.

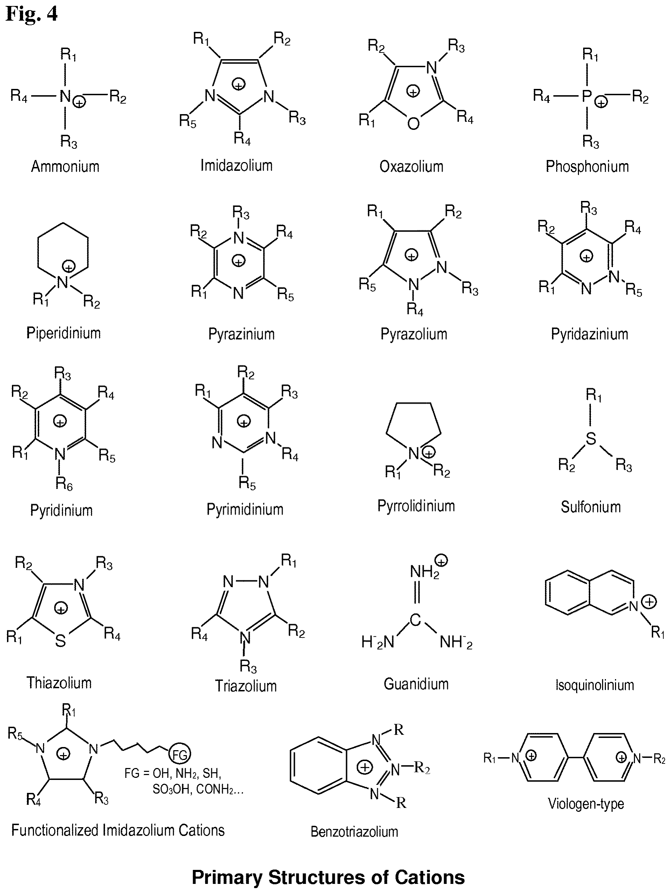

The electrolyte 6 includes a pairing of cations 9 and anions 11 and may include a solvent. The electrolyte 6 may be referred to as an "ionic liquid" as appropriate. Various combinations of cations 9, anions 11 and solvent may be used. In the exemplary ultracapacitor 10, the cations 9 may include at least one of 1-(3-Cyanopropyl)-3-methylimidazolium, 1,2-Dimethyl-3-propylimidazolium, 1,3-Bis(3-cyanopropyl)imidazolium, 1,3-Diethoxyimidazolium, 1-Butyl-1-methylpiperidinium, 1-Butyl-2,3-dimethylimidazolium, 1-Butyl-3-methylimidazolium, 1-Butyl-4-methylpyridinium, 1-Butylpyridinium, 1-Decyl-3-methylimidazolium, 1-Ethyl-3-methylimidazolium, 3-Methyl-1-propylpyridinium, and combinations thereof as well as other equivalents as deemed appropriate. Additional exemplary cations 9 include imidazolium, pyrazinium, piperidinium, pyridinium, pyrimidinium, and pyrrolidinium (structures of which are depicted in FIG. 4). In the exemplary ultracapacitor 10, the anions 11 may include at least one of bis(trifluoromethanesulfonate)imide, tris(trifluoromethanesulfonate)methide, dicyanamide, tetrafluoroborate, hexafluorophosphate, trifluoromethanesulfonate, bis(pentafluoroethanesulfonate)imide, thiocyanate, trifluoro(trifluoromethyl)borate, and combinations thereof as well as other equivalents as deemed appropriate.

The solvent may include acetonitrile, amides, benzonitrile, butyrolactone, cyclic ether, dibutyl carbonate, diethyl carbonate, diethylether, dimethoxyethane, dimethyl carbonate, dimethylformamide, dimethylsulfone, dioxane, dioxolane, ethyl formate, ethylene carbonate, ethylmethyl carbonate, lactone, linear ether, methyl formate, methyl propionate, methyltetrahydrofuran, nitrile, nitrobenzene, nitromethane, n-methylpyrrolidone, propylene carbonate, sulfolane, sulfone, tetrahydrofuran, tetramethylene sulfone, thiophene, ethylene glycol, diethylene glycol, triethylene glycol, polyethylene glycols, carbonic acid ester, γ-butyrolactone, nitrile, tricyanohexane, any combination thereof or other material(s) that exhibit appropriate performance characteristics.

Referring now to FIG. 4, there are shown various additional embodiments of cations 9 suited for use in an ionic liquid to provide the electrolyte 6. These cations 9 may be used alone or in combination with each other, in combination with at least some of the foregoing embodiments of cations 9, and may also be used in combination with other cations 9 that are deemed compatible and appropriate by a user, designer, manufacturer or other similarly interested party. The cations 9 depicted in FIG. 4 include, without limitation, ammonium, imidazolium, oxazolium, phosphonium, piperidinium, pyrazinium, pyrazinium, pyridazinium, pyridinium, pyrimidinium, pyrrolidinium, sulfonium, thiazolium, triazolium, guanidium, isoquinolinium, benzotriazolium, viologen-types, and functionalized imidazolium cations.

With regard to the cations 9 shown in FIG. 4, various branch groups (R₁, R₂, R₃, ...Rₓ) are included. In the case of the cations 9, each branch groups (Rₓ) may be one of alkyl, heteroalkyl, alkenyl, heteroalkenyl, alkynyl, heteroalkynyl, halo, amino, nitro, cyano, hydroxyl, sulfate, sulfonate, or a carbonyl group any of which is optionally substituted.

The term "alkyl" is recognized in the art and may include saturated aliphatic groups, including straight-chain alkyl groups, branched-chain alkyl groups, cycloalkyl (alicyclic) groups, alkyl substituted cycloalkyl groups, and cycloalkyl substituted alkyl groups. In certain embodiments, a straight chain or branched chain alkyl has about 20 or fewer carbon atoms in its backbone (e.g., C₁-C₂₀ for straight chain, C₁-C₂₀ for branched chain). Likewise, cycloalkyls have from about 3 to about 10 carbon atoms in their ring structure, and alternatively about 5, 6 or 7 carbons in the ring structure. Examples of alkyl groups include, but are not limited to, methyl, ethyl, propyl, butyl, pentyl, hexyl, ethyl hexyl, cyclopropyl, cyclobutyl, cyclopentyl, cyclohexyl and the like.

The term "heteroalkyl" is recognized in the art and refers to alkyl groups as described herein in which one or more atoms is a heteroatom (e.g., oxygen, nitrogen, sulfur, and the like). For example, alkoxy group (e.g., -OR) is a heteroalkyl group.

The terms "alkenyl" and "alkynyl" are recognized in the art and refer to unsaturated aliphatic groups analogous in length and possible substitution to the alkyls described above, but that contain at least one double or triple bond respectively.

The "heteroalkenyl" and "heteroalkynyl" are recognized in the art and refer to alkenyl and alkynyl alkyl groups as described herein in which one or more atoms is a heteroatom (e.g., oxygen, nitrogen, sulfur, and the like).

Generally, any ion with a negative charge maybe used as the anion 11. The anion 11 selected is generally paired with a large organic cation 9 to form a low temperature melting ionic salt. Room temperature (and lower) melting salts come from mainly large anions 9 with a charge of -1. Salts that melt at even lower temperatures generally are realized with anions 11 with easily delocalized electrons. Anything that will decrease the affinity between ions (distance, delocalization of charge) will subsequently decrease the melting point. Although possible anion formations are virtually infinite, only a subset of these will work in low temperature ionic liquid application. This is a non-limiting overview of possible anion formations for ionic liquids.

Common substitute groups (α) suited for use of the anions 11 provided in Table 1 include: -F⁻, -Cl⁻, -Br⁻, -I^{-,} -OCH₃⁻, -CN⁻, -SCN⁻, -C₂H₃O₂⁻, -ClO⁻, -ClO₂⁻, -ClO₃⁻, -ClO₄⁻, - NCO⁻, -NCS⁻, -NCSe⁻, -NCN⁻, -OCH(CH₃)₂⁻, -CH₂OCH₃⁻, -COOH⁻, -OH⁻, -SOCH₃⁻, - SO₂CH₃⁻, -SOCH₃⁻, -SO₂CF₃⁻, -SO₃H⁻, -SO₃CF₃⁻, -O(CF₃)₂C₂(CF₃)₂O⁻, -CF₃⁻, -CHF₂⁻, -CH₂F⁻, -CH₃⁻ -NO₃⁻, -NO₂⁻, -SO₃⁻, -SO₄²⁻, -SF₅⁻,-CB₁₁H₁₂⁻, -CB₁₁H₆C₁₆⁻, -CH₃CB₁₁H₁₁⁻, - C₂H₅CB₁₁H₁₁⁻ , -A-PO₄⁻, -A-SO₂⁻, A-SO₃⁻, -A-SO₃H⁻, -A-COO⁻, -A-CO⁻{where A is a phenyl (the phenyl group or phenyl ring is a cyclic group of atoms with the formula C₆H₅) or substituted phenyl, alkyl, (a radical that has the general formula CnH₂ₙ₊₁, formed by removing a hydrogen atom from an alkane) or substituted alkyl group, negatively charged radical alkanes, (alkane are chemical compounds that consist only of hydrogen and carbon atoms and are bonded exclusively by single bonds) halogenated alkanes and ethers (which are a class of organic compounds that contain an oxygen atom connected to two alkyl or aryl groups).

With regard to anions 11 suited for use in an ionic liquid that provides the electrolyte 6, various organic anions 11 may be used. Exemplary anions 11 and structures thereof are provided in Table 1. In a first embodiment, (No. 1), exemplary anions 11 are formulated from the list of substitute groups (α) provided above, or their equivalent. In additional embodiments, (Nos. 2 - 5), exemplary anions 11 are formulated from a respective base structure (Y₂, Y₃, Y₄,... Yₙ) and a respective number of anion substitute groups (α₁, α₂, α₃,... αₙ), where the respective number of anion substitute groups (α) may be selected from the list of substitute (α) groups provided above, or their equivalent. Note that in some embodiments, a plurality of anion substitute groups (α) (i.e., at least one differing anion substitute group (α)) may be used in any one embodiment of the anion 11. Also, note that in some embodiments, the base structure (Y) is a single atom or a designated molecule (as described in Table 1), or may be an equivalent.

More specifically, and by way of example, with regard to the exemplary anions provided in Table 1, certain combinations may be realized. As one example, in the case of No. 2, the base structure (Y₂) includes a single structure (e.g., an atom, or a molecule) that is bonded to two anion substitute groups (α₂). While shown as having two identical anion substitute groups (α₂), this need not be the case. That is, the base structure (Y₂) may be bonded to varying anion substitute groups (α₂), such as any of the anion substitute groups (α) listed above. Similarly, the base structure (Y₃) includes a single structure (e.g., an atom) that is bonded to three anion substitute groups (α₃), as shown in case No. 3. Again, each of the anion substitute groups (α) included in the anion may be varied or diverse, and need not repeat (be repetitive or be symmetric) as shown in Table 1. In general, with regard to the notation in Table 1, a subscript on one of the base structures denotes a number of bonds that the respective base structure may have with anion substitute groups (α). That is, the subscript on the respective base structure (Yₙ) denotes a number of accompanying anion substitute groups (αₙ) in the respective anion.

**Table 1**

| Exemplary Organic Anions for an Ionic Liquid | | | |
|---|---|---|---|
| No.: | Ion | Guidelines for Anion Structure and Exemplary Ionic Liquids | |
| 1 | -α₁ | Some of the above α may mix with organic cations to form an ionic liquid. | |
| | | An exemplary anion: Cl⁻ Exemplary ionic liquid: [BMI*][Cl] | |
| | | *BMI - butyl methyl immadizolium | 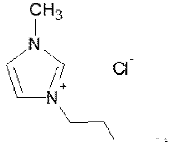 |
| 2 | -Y₂α₂ | Y₂ may be any of the following: N, O, C=O, S=O. | |
| | | Exemplary anions include: B (CF₃CO₂)₄⁻ N(SO₂CF₃)₂⁻ | 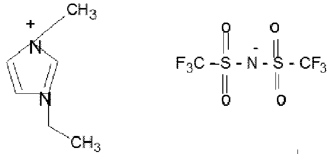 |
| | | Exemplary ionic liquid: [EMI*][NTF₂] | |
| | | *EMI - ethyl methyl immadizolium | |
| 3 | -Y₃α₃ | Y₃ may be any of the following: Be, C, N, O, Mg, Ca, Ba, Ra, Au. | |
| | | Exemplary anions include: -C(SO₂CF₃)₃⁻ | |
| | | Exemplary ionic liquid: [BMI] C(SO₂CF₃)₃⁻ | 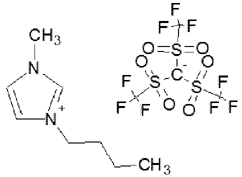 |
| 4 | -Y₄α₄ | Y₄ may be any of the following: B, Al, Ga, Th, In, P. | 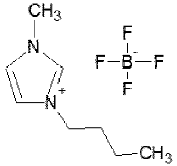 |
| | | Exemplary anions include: -BF₄⁻,-AlCl₄⁻ | |
| | | Exemplary ionic liquid: [BMI][BF_{4]} | |
| 5 | -Y₆α₆ | Y₆ can be any of the following: P, S, Sb, As, N, Bi, Nb, Sb. | 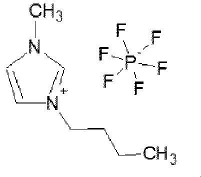 |
| | | Exemplary anions include: -P(CF₃)₄F₂⁻, -AsF₆⁻ | |
| | | Exemplary ionic liquid: [BMI][PF₆] | |

The term "cyano" is given its ordinary meaning in the art and refers to the group, CN. The term "sulfate" is given its ordinary meaning in the art and refers to the group, SO₂. The term "sulfonate" is given its ordinary meaning in the art and refers to the group, SO₃X, where X may be an electron pair, hydrogen, alkyl or cycloalkyl. The term "carbonyl" is recognized in the art and refers to the group, C=O.

An important aspect for consideration in construction of the ultracapacitor 10 is maintaining good chemical hygiene. In order to assure purity of the components, in various embodiments, the activated carbon, carbon fibers, rayon, carbon cloth, and/or nanotubes making up the energy storage media 1 for the two electrodes 3, are dried at elevated temperature in a vacuum environment. The separator 5 is also dried at elevated temperature in a vacuum environment. Once the electrodes 3 and the separator 5 are dried under vacuum, they are packaged in the housing 7 without a final seal or cap in an atmosphere with less than 50 parts per million (ppm) of water. The uncapped ultracapacitor 10 may be dried, for example, under vacuum over a temperature range of about 100 degrees Celsius to about 300 degrees Celsius. Once this final drying is complete, the electrolyte 6 may be added and the housing 7 is sealed in a relatively dry atmosphere (such as an atmosphere with less than about 50 ppm of moisture). Of course, other methods of assembly may be used, and the foregoing provides merely a few exemplary aspects of assembly of the ultracapacitor 10.

Generally, impurities in the electrolyte 6 are kept to a minimum. For example, in some embodiments, a total concentration of halide ions (chloride, bromide, fluoride, iodide), is kept to below about 1,000 ppm. A total concentration of metallic species (e.g., Br, Cd, Co, Cr, Cu, Fe, K, Li, Mo, Na, Ni, Pb, Zn, including an at least one of an alloy and an oxide thereof), is kept to below about 1,000 ppm. Further, impurities from solvents and precursors used in the synthesis process are kept below about 1,000 ppm and can include, for example, bromoethane, chloroethane, 1-bromobutane, 1-chlorobutane, 1-methylimidazole, ethyl acetate, methylene chloride and so forth.

In some embodiments, the impurity content of the ultracapacitor 10 has been measured using ion selective electrodes and the Karl Fischer titration procedure, which has been applied to electrolyte 6 of the ultracapacitor 10. It has been found that the total halide content in the ultracapacitor 10 according to the teachings herein has been found to be less than about 200 ppm of halides (Cl⁻ and F⁻) and water content is less than about 100 ppm.

Impurities can be measured using a variety of techniques, such as, for example, Atomic Absorption Spectometry (AAS), Inductively Coupled Plasma-Mass Spectometry (ICPMS), or simplified solubilizing and electrochemical sensing of trace heavy metal oxide particulates. AAS is a spectro-analytical procedure for the qualitative and quantitative determination of chemical elements employing the absorption of optical radiation (light) by free atoms in the gaseous state. The technique is used for determining the concentration of a particular element (the analyte) in a sample to be analyzed. AAS can be used to determine over seventy different elements in solution or directly in solid samples. ICPMS is a type of mass spectrometry that is highly sensitive and capable of the determination of a range of metals and several non-metals at concentrations below one part in 10¹² (part per trillion). This technique is based on coupling together an inductively coupled plasma as a method of producing ions (ionization) with a mass spectrometer as a method of separating and detecting the ions. ICPMS is also capable of monitoring isotopic speciation for the ions of choice.

Additional techniques may be used for analysis of impurities. Some of these techniques are particularly advantageous for analyzing impurities in solid samples. Ion Chromatography (IC) may be used for determination of trace levels of halide impurities in the electrolyte 6 (e.g., an ionic liquid). One advantage of Ion Chromatography is that relevant halide species can be measured in a single chromatographic analysis. A Dionex AS9-HC column using an eluent consisting 20 mM NaOH and 10% (v/v) acetonitrile is one example of an apparatus that may be used for the quantification of halides from the ionic liquids. A further technique is that of X-ray fluorescence.

X-ray fluorescence (XRF) instruments may be used to measure halogen content in solid samples. In this technique, the sample to be analyzed is placed in a sample cup and the sample cup is then placed in the analyzer where it is irradiated with X-rays of a specific wavelength. Any halogen atoms in the sample absorb a portion of the X-rays and then reflect radiation at a wavelength that is characteristic for a given halogen. A detector in the instrument then quantifies the amount of radiation coming back from the halogen atoms and measures the intensity of radiation. By knowing the surface area that is exposed, concentration of halogens in the sample can be determined. A further technique for assessing impurities in a solid sample is that of pyrolysis.

Adsorption of impurities may be effectively measured through use of pyrolysis and microcoulometers. Microcoulometers are capable of testing almost any type of material for total chlorine content. As an example, a small amount of sample (less than 10 milligrams) is either injected or placed into a quartz combustion tube where the temperature ranges from about 600 degrees Celsius to about 1,000 degrees Celsius. Pure oxygen is passed through the quartz tube and any chlorine containing components are combusted completely. The resulting combustion products are swept into a titration cell where the chloride ions are trapped in an electrolyte solution. The electrolyte solution contains silver ions that immediately combine with any chloride ions and drop out of solution as insoluble silver chloride. A silver electrode in the titration cell electrically replaces the used up silver ions until the concentration of silver ions is back to where it was before the titration began. By keeping track of the amount of current needed to generate the required amount of silver, the instrument is capable of determining how much chlorine was present in the original sample. Dividing the total amount of chlorine present by the weight of the sample gives the concentration of chlorine that is actually in the sample. Other techniques for assessing impurities may be used.

Surface characterization and water content in the electrode 3 may be examined, for example, by infrared spectroscopy techniques. The four major absorption bands at around 1130, 1560, 3250 and 2300 cm⁻¹, correspond to vC = O in , vC = C in aryl, vO - H and vC - N, respectively. By measuring the intensity and peak position, it is possible to quantitatively identify the surface impurities within the electrode 3.

Another technique for identifying impurities in the electrolyte 6 and the ultracapacitor 10 is Raman spectroscopy. This spectroscopic technique relies on inelastic scattering, or Raman scattering, of monochromatic light, usually from a laser in the visible, near infrared, or near ultraviolet range. The laser light interacts with molecular vibrations, phonons or other excitations in the system, resulting in the energy of the laser photons being shifted up or down. Thus, this technique may be used to characterize atoms and molecules within the ultracapacitor 10. A number of variations of Raman spectroscopy are used, and may prove useful in characterizing contents the ultracapacitor 10.

Once the ultracapacitor 10 is fabricated, it may be used in high temperature applications with little or no leakage current and little increase in resistance. The ultracapacitor 10 described herein can operate efficiently at temperatures from about minus 40 degrees Celsius to about 210 degrees Celsius with leakage currents normalized over the volume of the device less than 1 amp per liter (A/L) of volume of the device within the entire operating voltage and temperature range.

By reducing the moisture content in the ultracapacitor 10 (e.g., to less than 500 part per million (ppm) over the weight and volume of the electrolyte and the impurities to less than 1,000 ppm), the ultracapacitor 10 can efficiently operate over the temperature range, with a leakage current (I/L) that is less than 1,000 mAmp per Liter within that temperature range and voltage range.

In one embodiment, leakage current (I/L) at a specific temperature is measured by holding the voltage of the ultracapacitor 10 constant at the rated voltage (i.e., the maximum rated operating voltage) for seventy two (72) hours. During this period, the temperature remains relatively constant at the specified temperature. At the end of the measurement interval, the leakage current of the ultracapacitor 10 is measured.

In some embodiments, a maximum voltage rating of the ultracapacitor 10 is about 4 V at room temperature. An approach to ensure performance of the ultracapacitor 10 at elevated temperatures (for example, over 210 degrees Celsius), is to derate (i.e., to reduce) the voltage rating of the ultracapacitor 10. For example, the voltage rating may be adjusted down to about 0.5 V, such that extended durations of operation at higher temperature are achievable.

Another embodiment for ensuring a high degree of purity includes an exemplary process for purifying the electrolyte 6. It should be noted that although the process is presented in terms of specific parameters (such as quantities, formulations, times and the like), that the presentation is merely exemplary and illustrative of the process for purifying electrolyte and is not limiting thereof.

In a first step of the process for purifying electrolyte, the electrolyte 6 (in some embodiments, the ionic liquid) is mixed with deionized water, and then raised to a moderate temperature for some period of time. In a proof of concept, fifty (50) milliliters (ml) of ionic liquid was mixed with eight hundred and fifty (850) milliliters (ml) of the deionized water. The mixture was raised to a constant temperature of sixty (60) degrees Celsius for about twelve (12) hours and subjected to constant stirring (of about one hundred and twenty (120) revolutions per minute (rpm)).

In a second step, the mixture of ionic liquid and deionized water is permitted to partition. In this example, the mixture was transferred via a funnel, and allowed to sit for about four (4) hours.

In a third step, the ionic liquid is collected. In this example, a water phase of the mixture resided on the bottom, with an ionic liquid phase on the top. The ionic liquid phase was transferred into another beaker.

In a fourth step, a solvent was mixed with the ionic liquid. In this example, a volume of about twenty five (25) milliliters (ml) of ethyl acetate was mixed with the ionic liquid. This mixture was again raised to a moderate temperature and stirred for some time.

Although ethyl acetate was used as the solvent, the solvent can be at least one of diethylether, pentone, cyclopentone, hexane, cyclohexane, benzene, toluene, 1-4 dioxane, chloroform or any combination thereof as well as other material(s) that exhibit appropriate performance characteristics. Some of the desired performance characteristics include those of a non-polar solvent as well as a high degree of volatility.

In a fifth step, carbon powder is added to the mixture of the ionic liquid and solvent. In this example, about twenty (20) weight percent (wt%) of carbon (of about a 0.45 micrometer diameter) was added to the mixture.

In a sixth step, the ionic liquid is again mixed. In this example, the mixture with the carbon powder was then subjected to constant stirring (120 rpm) overnight at about seventy (70) degrees Celsius.

In a seventh step, the carbon and the ethyl acetate are separated from the ionic liquid. In this example, the carbon was separated using Buchner filtration with a glass microfiber filter. Multiple filtrations (three) were performed. The ionic liquid collected was then passed through a 0.2 micrometer syringe filter in order to remove substantially all of the carbon particles. In this example, the solvent was then subsequently separated from the ionic liquid by employing rotary evaporation. Specifically, the sample of ionic liquid was stirred while increasing temperature from seventy (70) degrees Celsius to eighty (80) degrees Celsius, and finished at one hundred (100) degrees Celsius. Evaporation was performed for about fifteen (15) minutes at each of the respective temperatures.

The process for purifying electrolyte has proven to be very effective. For the sample ionic liquid, water content was measured by titration, with a titration instrument provided by Mettler-Toledo Inc., of Columbus, Ohio (model No: AQC22). Halide content was measured with an ISE instrument provided by Hanna Instruments of Woonsocket, Rhode Island (model no. AQC22). The standards solution for the ISE instrument was obtained from Hanna, and included HI 4007-03 (1,000 ppm chloride standard), HI 4010-03 (1,000 ppm fluoride standard) HI 4000-00 (ISA for halide electrodes), and HI 4010-00 (TISAB solution for fluoride electrode only). Prior to performing measurements, the ISE instrument was calibrated with the standards solutions using 0.1, 10, 100 and 1,000 parts per million (ppm) of the standards, mixed in with deionized water. ISA buffer was added to the standard in a 1:50 ratio for measurement of Cl⁻ ions. Results are shown in Table 2.

**Table 2**

| Purification Data for Electrolyte | | |
|---|---|---|
| Impurity | Before (ppm) | After (ppm) |
| Cl⁻ | 5,300.90 | 769 |
| F- | 75.61 | 10.61 |
| H₂O | 1080 | 20 |

A four step process was used to measure the halide ions. First, Cl⁻ and F⁻ ions were measured in the deionized water. Next, a 0.01 M solution of ionic liquid was prepared with deionized water. Subsequently, Cl⁻ and F⁻ ions were measured in the solution. Estimation of the halide content was then determined by subtracting the quantity of ions in the water from the quantity of ions in the solution.

As an overview, a method of assembly of a cylindrically shaped ultracapacitor 10 is provided. Beginning with the electrodes 3, each electrode 3 is fabricated once the energy storage media 1 has been associated with the current collector 2. A plurality of leads is then coupled to each electrode 3 at appropriate locations. A plurality of electrodes 3 are then oriented and assembled with an appropriate number of separators 5 there between to form the storage cell 12. The storage cell 12 may then be rolled into a cylinder, and may be secured with a wrapper. Generally, respective ones of the leads are then bundled to form each of the terminals 8.

Prior to incorporation of the electrolyte 6 into the ultracapacitor 10 (such as prior to assembly of the storage cell 12, or thereafter) each component of the ultracapacitor 10 may be dried to remove moisture. This may be performed with unassembled components (i.e., an empty housing 7, as well as each of the electrodes 3 and each of the separators 5), and subsequently with assembled components (such as the storage cell 12).

Drying may be performed, for example, at an elevated temperature in a vacuum environment. Once drying has been performed, the storage cell 12 may then be packaged in the housing 7 without a final seal or cap. In some embodiments, the packaging is performed in an atmosphere with less than 50 parts per million (ppm) of water. The uncapped ultracapacitor 10 may then be dried again. For example, the ultracapacitor 10 may be dried under vacuum over a temperature range of about 100 degrees Celsius to about 300 degrees Celsius. Once this final drying is complete, the housing 7 may then be sealed in, for example, an atmosphere with less than 50 ppm of moisture.

In some embodiments, once the drying process (which may also be referred to a "baking" process) has been completed, the environment surrounding the components may be filled with an inert gas. Exemplary gasses include argon, nitrogen, helium, and other gasses exhibiting similar properties (as well as combinations thereof).

Generally, a fill port (a perforation in a surface of the housing 7) is included in the housing 7, or may be later added. Once the ultracapacitor 10 has been filled with electrolyte 6, the fill port may then be closed. Closing the fill port may be completed, for example, by welding material (e.g., a metal that is compatible with the housing 7) into or over the fill port. In some embodiments, the fill port may be temporarily closed prior to filling, such that the ultracapacitor 10 may be moved to another environment, for subsequent reopening, filling and closure. However, as discussed herein, it is considered that the ultracapacitor 10 is dried and filled in the same environment.

A number of methods may be used to fill the housing 7 with a desired quantity of electrolyte 6. Generally, controlling the fill process may provide for, among other things, increases in capacitance, reductions in equivalent-series-resistance (ESR), and limiting waste of electrolyte 6. A vacuum filling method is provided as a non-limiting example of a techinque for filling the housing 7 and wetting the storage cell 12 with the electrolyte 6.

First, however, note that measures may be taken to ensure that any material that has a potential to contaminate components of the ultracapacitor 10 is clean, compatible and dry. As a matter of convention, it may be considered that "good hygiene" is practiced to ensure assembly processes and components do not introduce contaminants into the ultracapacitor 10. Also, as a matter of convention, it may be considered that a "contaminant" may be defined as any unwanted material that will negatively affect performance of the ultracapacitor 10 if introduced. Also note, that generally herein, contaminants may be assessed as a concentration, such as in parts-per-million (ppm). The concentration may be taken as by weight, volume, sample weight, or in any other manner as determined appropriate.

In the "vacuum method" a container is placed onto the housing 7 around the fill port. A quantity of electrolyte 6 is then placed into the container in an environment that is substantially free of oxygen and water (i.e., moisture). A vacuum is then drawn in the environment, thus pulling any air out of the housing and thus simultaneously drawing the electrolyte 6 into the housing 7. The surrounding environment may then be refilled with inert gas (such as argon, nitrogen, or the like, or some combination of inert gases), if desired. The ultracapacitor 10 may be checked to see if the desired amount of electrolyte 6 has been drawn in. The process may be repeated as necessary until the desired amount of electrolyte 6 is in the ultracapacitor 10.

After filling with electrolyte 6, in some embodiments, material may be fit into the fill port to seal the ultracapacitor 10. The material may be, for example, a metal that is compatible with the housing 7 and the electrolyte 6. In one example, material is force fit into the fill port, essentially performing a "cold weld" of a plug in the fill port. Of course, the force fit may be complimented with other welding techniques as discussed further herein.

In order to show how the fill process effects the ultracapacitor 10, two similar embodiments of the ultracapacitor 10 were built. One was filled without a vacuum, the other was filled under vacuum. Electrical performance of the two embodiments is provided in Table 3. By repeated performance of such measurements, it has been noted that increased performance is realized with by filling the ultracapacitor 10 through applying a vacuum. It has been determined that, in general, is desired that pressure within the housing 7 is reduced to below about 150 mTorr, and more particularly to below about 40 mTorr.

**Table 3**

| Comparative Performance for Fill Methods | | | |
|---|---|---|---|
| Parameter (at 0.1 V) | Without vacuum | With vacuum | Deviation |
| ESR @ 45° Φ | 3.569 Ohms | 2.568 Ohms | (-28%) |
| Capacitance @ 12 mHz | 155.87 mF | 182.3 mF | (+14.49%) |
| Phase @ 12 mHz | 79.19 degrees | 83 degrees | (+4.59%) |

In order to evaluate efficacy of vacuum filling techniques, two different pouch cells were tested. The pouch cells included two electrodes 3, each electrode 3 being based on carbonaceous material. Each of the electrodes 3 were placed opposite and facing each other. The separator 5 was disposed between them to prevent short circuit and everything was soaked in electrolyte 6. Two external tabs were used to provide for four measurement points. The separator 5 used was a polyethylene separator 5, and the cell had a total volume of about 0.468 ml. This resulted in a substantial decrease in initial leakage current, as well as a decrease in leakage current over the later portion of the measurement interval.

Leakage current may be determined in a number of ways. Qualitatively, leakage current may be considered as current drawn into a device, once the device has reached a state of equilibrium. In practice, it is always or almost always necessary to estimate the actual leakage current as a state of equilibrium that may generally only by asymptotically approached. Thus, the leakage current in a given measurement may be approximated by measuring the current drawn into the ultracapacitor 10, while the ultracapacitor 10 is held at a substantially fixed voltage and exposed to a substantially fixed ambient temperature for a relatively long period of time. In some instances, a relatively long period of time may be determined by approximating the current time function as an exponential function, then allowing for several (e.g, about 3 to 5) characteristic time constants to pass. Often, such a duration ranges from about 50 hours to about 100 hours for many ultracapacitor technologies. Alternatively, if such a long period of time is impractical for any reason, the leakage current may simply be extrapolated, again, perhaps, by approximating the current time function as an exponential or any approximating function deemed appropriate. Notably, leakage current will generally depend on ambient temperature. So, in order to characterize performance of a device at a temperature or in a temperature range, it is generally important to expose the device to the ambient temperature of interest when measuring leakage current.

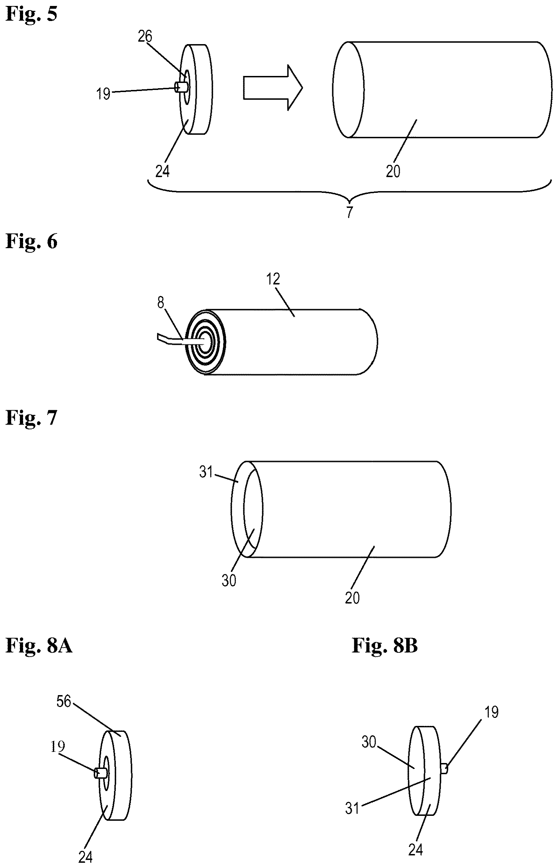

Refer now to FIG. 5, where aspects of an exemplary housing 7 are shown. Among other things, the housing 7 provides structure and physical protection for the ultracapacitor 10. In this example, the housing 7 includes an annular cylindrically shaped body 20 and a complimentary cap 24. In this embodiment, the cap 24 includes a central portion that has been removed and filled with an electrical insulator 26. A cap feed-through 19 penetrates through the electrical insulator 26 to provide users with access to the stored energy.

Common materials for the housing 7 include stainless steel, aluminum, tantalum, titanium, nickel, copper, tin, various alloys, laminates, and the like. Structural materials, such as some polymer-based materials may be used in the housing 7 (generally in combination with at least some metallic components).

Although this example depicts only one feed-through 19 on the cap 24, it should be recognized that the construction of the housing 7 is not limited by the embodiments discussed herein. For example, the cap 24 may include a plurality of feed-throughs 19. In some embodiments, the body 20 includes a second, similar cap 24 at an opposing end of the annular cylinder. Further, it should be recognized that the housing 7 is not limited to embodiments having an annular cylindrically shaped body 20. For example, the housing 7 may be a clamshell design, a prismatic design, a pouch, or of any other design that is appropriate for the needs of the designer, manufacturer or user.

In this example, the cap 24 is fabricated with an outer diameter that is designed for fitting snugly within an inner diameter of the body 20. When assembled, the cap 24 may be welded into the body 20, thus providing users with a hermetic seal.

Referring now to FIG. 6, there is shown an exemplary energy storage cell 12. In this example, the energy storage cell 12 is a "jelly roll" type of energy storage. In these embodiments, the energy storage materials are rolled up into a tight package. A plurality of leads generally form each terminal 8 and provide electrical access to the appropriate layer of the energy storage cell 12. Generally, when assembled, each terminal 8 is electrically coupled to the housing 7 (such as to a respective feed-through 19 and/or directly to the housing 7). The energy storage cell 12 may assume a variety of forms. There are generally at least two plurality of leads (e.g., terminals 8), one for each current collector 2. For simplicity, only one of terminal 8 is shown in a number of embodiments illustrated herein.

A highly efficient seal of the housing 7 is desired. That is, preventing intrusion of the external environment (such as air, humidity, etc,...) helps to maintain purity of the components of the energy storage cell 12. Further, this prevents leakage of electrolyte 6 from the energy storage cell 12.

Referring now to FIG. 7, the housing 7 may include an inner barrier 30. In some embodiments, the barrier 30 is a coating. In this example, the barrier 30 is formed of polytetrafluoroethylene (PTFE). Polytetrafluoroethylene (PTFE) exhibits various properties that make this composition well suited for the barrier 30. PTFE has a melting point of about 327 degrees Celsius, has excellent dielectric properties, has a coefficient of friction of between about 0.05 to 0.10, which is the third-lowest of any known solid material, has a high corrosion resistance and other beneficial properties. Generally, an interior portion of the cap 24 may include the barrier 30 disposed thereon.

Other materials may be used for the barrier 30. Among these other materials are forms of ceramics (any type of ceramic that may be suitably applied and meet performance criteria), other polymers (preferably, a high temperature polymer) and the like. Exemplary other polymers include perfluoroalkoxy (PFA) and fluorinated ethylene propylene (FEP) as well as ethylene tetrafluoroethylene (ETFE).

The barrier 30 may include any material or combinations of materials that provide for reductions in electrochemical or other types of reactions between the energy storage cell 12 and the housing 7 or components of the housing 7. In some embodiments, the combinations are manifested as homogeneous dispersions of differing materials within a single layer. In other embodiments, the combinations are manifested as differing materials within a plurality of layers. Other combinations may be used. In short, the barrier 30 may be considered as at least one of an electrical insulator and chemically inert (i.e., exhibiting low reactivity) and therefore substantially resists or impedes at least one of electrical and chemical interactions between the storage cell 12 and the housing 7. In some embodiments, the term "low reactivity" and "low chemical reactivity" generally refer to a rate of chemical interaction that is below a level of concern for an interested party.

In general, the interior of the housing 7 may be host to the barrier 30 such that all surfaces of the housing 7 which are exposed to the interior are covered. At least one untreated area 31 may be included within the body 20 and on an outer surface 36 of the cap 24 (see FIG. 8A). In some embodiments, untreated areas 31 (see FIG. 8B) may be included to account for assembly requirements, such as areas which will be sealed or connected (such as by welding).

The barrier 30 may be applied to the interior portions using conventional techniques. For example, in the case of PTFE, the barrier 30 may be applied by painting or spraying the barrier 30 onto the interior surface as a coating. A mask may be used as a part of the process to ensure untreated areas 31 retain desired integrity. In short, a variety of techniques may be used to provide the barrier 30.

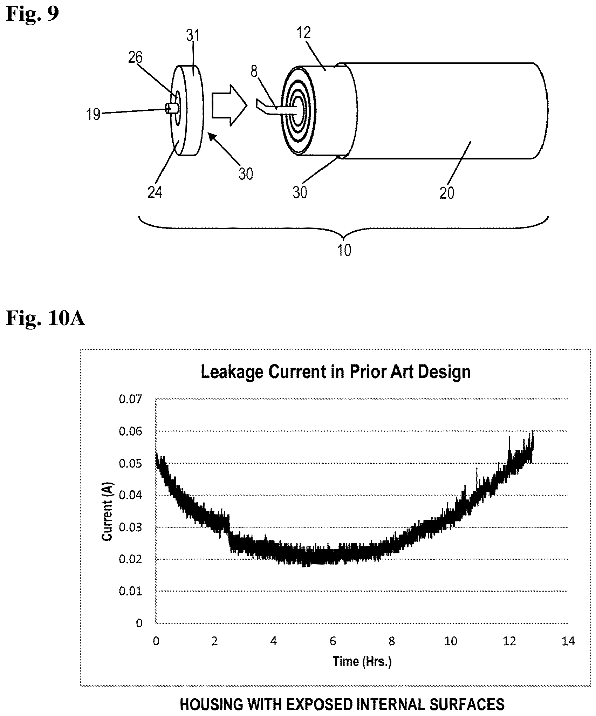

In an exemplary embodiment, the barrier 30 is about 3 mil to about 5 mil thick, while material used for the barrier 30 is a PFA based material. In this example, surfaces for receiving the material that make up the barrier 30 are prepared with grit blasting, such as with aluminum oxide. Once the surfaces are cleaned, the material is applied, first as a liquid then as a powder. The material is cured by a heat treating process. In some embodiments, the heating cycle is about 10 minutes to about 15 minutes in duration, at temperatures of about 370 degrees Celsius. This results in a continuous finish to the barrier 30 that is substantially free of pin-hole sized or smaller defects. FIG. 9 depicts assembly of an embodiment of the ultracapacitor 10 according to the teachings herein. In this embodiment, the ultracapacitor 10 includes the body 20 that includes the barrier 30 disposed therein, a cap 24 with the barrier 30 disposed therein, and the energy storage cell 12. During assembly, the cap 24 is set over the body 20. A first one of the terminals 8 is electrically coupled to the cap feed-through 19, while a second one of the terminals 8 is electrically coupled to the housing 7, typically at the bottom, on the side or on the cap 24. In some embodiments, the second one of the terminals 8 is coupled to another feed-through 19 (such as of an opposing cap 24).

With the barrier 30 disposed on the interior surface(s) of the housing 7, electrochemical and other reactions between the housing 7 and the electrolyte are greatly reduced or substantially eliminated. This is particularly significant at higher temperatures where a rate of chemical and other reactions is generally increased.

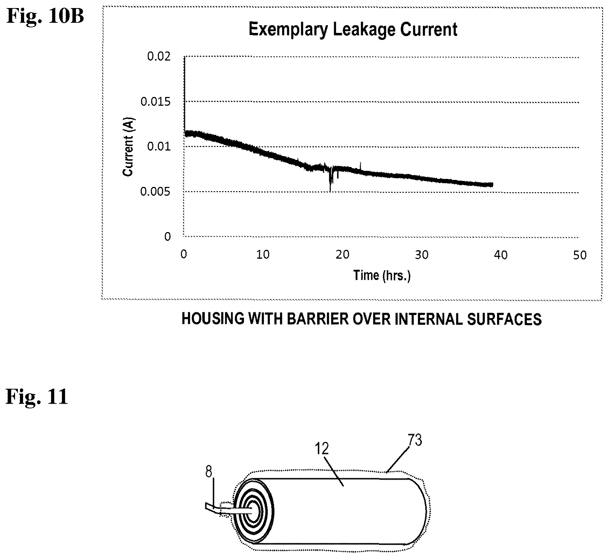

Referring now to FIG. 10, there is shown relative performance of the ultracapacitor 10 in comparison to an otherwise equivalent ultracapacitor. In FIG. 10A, leakage current is shown for a prior art embodiment of the ultracapacitor 10. In FIG. 10B, leakage current is shown for an equivalent ultracapacitor 10 that includes the barrier 30. In FIG. 10B, the ultracapacitor 10 is electrically equivalent to the ultracapacitor whose leakage current is shown in FIG. 10A. In both cases, the housing 7 was stainless steel, and the voltage supplied to the cell was 1.75 Volts, and electrolyte was not purified. Temperature was held a constant 150 degrees Celsius. Notably, the leakage current in FIG. 10B indicates a comparably lower initial value and no substantial increase over time while the leakage current in FIG. 10A indicates a comparably higher initial value as well as a substantial increase over time.

Generally, the barrier 30 provides a suitable thickness of suitable materials between the energy storage cell 12 and the housing 7. The barrier 30 may include a homogeneous mixture, a heterogeneous mixture and/or at least one layer of materials. The barrier 30 may provide complete coverage (i.e., provide coverage over the interior surface area of the housing with the exception of electrode contacts) or partial coverage. In some embodiments, the barrier 30 is formed of multiple components. Consider, for example, the embodiment presented below and illustrated in FIG. 11.

Referring to FIG. 11, aspects of an additional embodiment are shown. In some embodiments, the energy storage cell 12 is deposited within an envelope 33. That is, the energy storage cell 12 has the barrier 30 disposed thereon, wrapped thereover, or otherwise applied to separate the energy storage cell 12 from the housing 7 once assembled. The envelope 33 may be applied well ahead of packaging the energy storage cell 12 into the housing 7. Therefore, use of an envelope 33 may present certain advantages, such as to manufacturers. (Note that the envelope 33 is shown as loosely disposed over the energy storage cell 12 for purposes of illustration).

In some embodiments, the envelope 33 is used in conjunction with the coating, wherein the coating is disposed over at least a portion of the interior surfaces. For example, in one embodiment, the coating is disposed within the interior of the housing 7 only in areas where the envelope 33 may be at least partially compromised (such as be a protruding terminal 8). Together, the envelope 33 and the coating form an efficient barrier 30.

Accordingly, incorporation of the barrier 30 may provide for an ultracapacitor that exhibits leakage current with comparatively low initial values and substantially slower increases in leakage current over time in view of the prior art. Significantly, the leakage current of the ultracapacitor remains at practical (i.e., desirably low) levels when the ultracapacitor is exposed to ambient temperatures for which prior art capacitors would exhibit prohibitively large initial values of leakage current and / or prohibitively rapid increases in leakage current over time.

As a matter of convention, the term "leakage current" generally refers to current drawn by the capacitor which is measured after a given period of time. This measurement is performed when the capacitor terminals are held at a substantially fixed potential difference (terminal voltage). When assessing leakage current, a typical period of time is seventy two (72) hours, although different periods may be used. It is noted that leakage current for prior art capacitors generally increases with increasing volume and surface area of the energy storage media and the attendant increase in the inner surface area of the housing. In general, an increasing leakage current is considered to be indicative of progressively increasing reaction rates within the ultracapacitor 10. Performance requirements for leakage current are generally defined by the environmental conditions prevalent in a particular application. For example, with regard to an ultracapacitor 10 having a volume of 20 mL, a practical limit on leakage current may fall below 100 mA.

Having thus described embodiments of the barrier 30, and various aspects thereof, it should be recognized the ultracapacitor 10 may exhibit other benefits as a result of reduced reaction between the housing 7 and the energy storage media 1. For example, an effective series resistance (ESR) of the ultracapacitor 10 may exhibit comparatively lower values over time. Further, unwanted chemical reactions that take place in a prior art capacitor often create unwanted effects such as out-gassing, or in the case of a hermetically sealed housing, bulging of the housing. In both cases, this leads to a compromise of the structural integrity of the housing and/or hermetic seal of the capacitor. Ultimately, this may lead to leaks or catastrophic failure of the prior art capacitor. In some embodiments, these effects may be substantially reduced or eliminated by the application of a disclosed barrier 30.

It should be recognized that the terms "barrier" and "coating" are not limiting of the teachings herein. That is, any technique for applying the appropriate material to the interior of the housing 7, body 20 and/or cap 24 may be used. For example, in other embodiments, the barrier 30 is actually fabricated into or onto material making up the housing body 20, the material then being worked or shaped as appropriate to form the various components of the housing 7. When considering some of the many possible techniques for applying the barrier 30, it may be equally appropriate to roll on, sputter, sinter, laminate, print, or otherwise apply the material(s). In short, the barrier 30 may be applied using any technique deemed appropriate by a manufacturer, designer and/or user.

Materials used in the barrier 30 may be selected according to properties such as reactivity, dielectric value, melting point, adhesion to materials of the housing 7, coefficient of friction, cost, and other such factors. Combinations of materials (such as layered, mixed, or otherwise combined) may be used to provide for desired properties.

Using an enhanced housing 7, such as one with the barrier 30, may, in some embodiments, limit degradation of the electrolyte 6. While the barrier 30 presents one technique for providing an enhanced housing 7, other techniques may be used. For example, use of a housing 7 fabricated from aluminum would be advantageous, due to the electrochemical properties of aluminum in the presence of electrolyte 6. However, given the difficulties in fabrication of aluminum, it has not been possible (until now) to construct embodiments of the housing 7 that take advantage of aluminum.

Additional embodiments of the housing 7 include those that present aluminum to all interior surfaces, which may be exposed to electrolyte, while providing users with an ability to weld and hermetically seal the housing. Improved performance of the ultracapacitor 10 may be realized through reduced internal corrosion, elimination of problems associated with use of dissimilar metals in a conductive media and for other reasons. Advantageously, the housing 7 makes use of existing technology, such available electrode inserts that include glass-to-metal seals (and may include those fabricated from stainless steel, tantalum or other advantageous materials and components), and therefore is economic to fabricate.

Although disclosed herein as embodiments of the housing 7 that are suited for the ultracapacitor 10, these embodiments (as is the case with the barrier 30) may be used with any type of energy storage deemed appropriate, and may include any type of technology practicable. For example, other forms of energy storage may be used, including electrochemical batteries, in particular, lithium based batteries.

In some embodiments, a material used for construction of the body 20 includes aluminum, which may include any type of aluminum or aluminum alloy deemed appropriate by a designer or fabricator (all of which are broadly referred to herein simply as "aluminum"). Various alloys, laminates, and the like may be disposed over (e.g., clad to) the aluminum (the aluminum being exposed to an interior of the body 20). Additional materials (such as structural materials or electrically insulative materials, such as some polymer-based materials) may be used to compliment the body and/or the housing 7. The materials disposed over the aluminum may likewise be chosen by what is deemed appropriate by a designer or fabricator.

In general, the material(s) exposed to an interior of the housing 7 exhibit adequately low reactivity when exposed to the electrolyte 6, and therefore are merely illustrative of some of the embodiments and are not limiting of the teachings herein.

Although this example depicts only one feed-through 19 on the cap 24, it should be recognized that the construction of the housing 7 is not limited by the embodiments discussed herein. For example, the cap 24 may include a plurality of feed-throughs 19. In some embodiments, the body 20 includes a second, similar cap 24 at the opposing end of the annular cylinder. Further, it should be recognized that the housing 7 is not limited to embodiments having an annular cylindrically shaped body 20. For example, the housing 7 may be a clamshell design, a prismatic design, a pouch, or of any other design that is appropriate for the needs of the designer, manufacturer or user.

A highly efficient seal of the housing 7 is desired. That is, preventing intrusion of the external environment (such as air, humidity, etc,...) helps to maintain purity of the components of the energy storage cell 12. Further, this prevents leakage of electrolyte 6 from the energy storage cell 12.

Referring now to FIG. 12, aspects of embodiments of a blank 34 for the cap 24 are shown. In FIG. 12A, the blank 34 includes a multi-layer material. A layer of a first material 41 is aluminum. A layer of a second material 42 is stainless steel. In the embodiments of FIG. 12, the stainless steel is clad onto the aluminum, thus providing for a material that exhibits a desired combination of metallurgical properties. That is, in the embodiments provided herein, the aluminum is exposed to an interior of the energy storage cell (i.e., the housing), while the stainless steel is exposed to exterior. In this manner, advantageous electrical properties of the aluminum are enjoyed, while structural properties (and metallurgical properties, i.e., weldability) of the stainless steel are relied upon for construction. The multi-layer material may include additional layers as deemed appropriate.

As mentioned above, the layer of first material 41 is clad onto (or with) the layer of second material 42. As used herein, the terms "clad," "cladding" and the like refer to the bonding together of dissimilar metals. Cladding is often achieved by extruding two metals through a die as well as pressing or rolling sheets together under high pressure. Other processes, such as laser cladding, may be used. A result is a sheet of material composed of multiple layers, where the multiple layers of material are bonded together such that the material may be worked with as a single sheet (e.g., formed as a single sheet of homogeneous material would be formed).

Referring still to FIG. 12A, in one embodiment, a sheet of flat stock (as shown) is used to provide the blank 34 to create a flat cap 24. A portion of the layer of second material 42 may be removed (such as around a circumference of the cap 24) in order to facilitate attachment of the cap 24 to the body 20. In FIG. 12B, another embodiment of the blank 34 is shown. In this example, the blank 34 is provided as a sheet of clad material that is formed into a concave configuration. In FIG. 12C, the blank 34 is provided as a sheet of clad material that is formed into a convex configuration. The cap 24 that is fabricated from the various embodiments of the blank 34 (such as those shown in FIG. 12), are configured to support welding to the body 20 of the housing 7. More specifically, the embodiment of FIG. 12B is adapted for fitting within an inner diameter of the body 20, while the embodiment of FIG. 12C is adapted for fitting over an outer diameter of the body 20. In various alternative embodiments, the layers of clad material within the sheet may be reversed.

When assembled, the cap 24 may be welded to the body 20, thus providing users with a hermetic seal. Exemplary welding techniques include laser welding and TIG welding, and may include other forms of welding as deemed appropriate.

Referring now to FIG. 13, there is shown an embodiment of an electrode assembly 50. The electrode assembly 50 is designed to be installed into the blank 34 and to provide electrical communication from the energy storage media to a user. Generally, the electrode assembly 50 includes a sleeve 51. The sleeve 51 surrounds the insulator 26, which in turn surrounds the feed-through 19. In this example, the sleeve 51 is an annular cylinder with a flanged top portion.

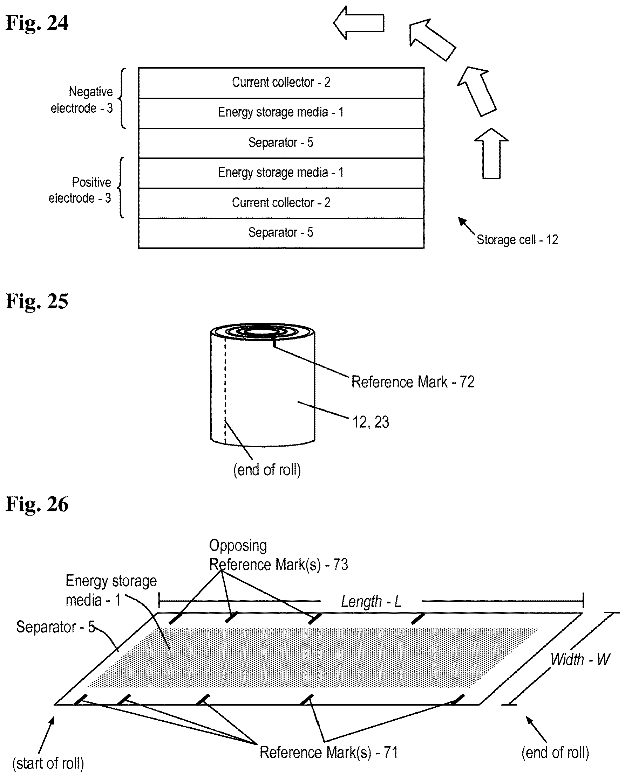

In order to assemble the cap 24, a perforation (not shown) is made in the blank 34. The perforation has a geometry that is sized to match the electrode assembly 50. Accordingly, the electrode assembly 50 is inserted into perforation of the blank 34. Once the electrode assembly 50 is inserted, the electrode assembly 50 may be affixed to the blank 34 through a technique such as welding. The welding may be laser welding which welds about a circumference of the flange of sleeve 51. Referring to FIG. 24, points 61 where welding is performed are shown. In this embodiment, the points 61 provide suitable locations for welding of stainless steel to stainless steel, a relatively simple welding procedure. Accordingly, the teachings herein provide for welding the electrode assembly 50 securely into place on the blank 34.

Material for constructing the sleeve 51 may include various types of metals or metal alloys. Generally, materials for the sleeve 51 are selected according to, for example, structural integrity and bondability (to the blank 34). Exemplary materials for the sleeve 51 include 304 stainless steel or 316 stainless steel. Material for constructing the feed-through 19 may include various types of metals or metal alloys. Generally, materials for the feed-through 19 are selected according to, for example, structural integrity and electrical conductance. Exemplary materials for the electrode include 446 stainless steel or 52 alloy.

Generally, the insulator 26 is bonded to the sleeve 51 and the feed-through 19 through known techniques (i.e., glass-to-metal bonding). Material for constructing the insulator 26 may include, without limitation, various types of glass, including high temperature glass, ceramic glass or ceramic materials. Generally, materials for the insulator are selected according to, for example, structural integrity and electrical resistance (i.e., electrical insulation properties).

Use of components (such as the foregoing embodiment of the electrode assembly 50) that rely on glass-to-metal bonding as well as use of various welding techniques provides for hermetic sealing of the energy storage. Other components may be used to provide hermetic sealing as well. As used herein, the term "hermetic seal" generally refers to a seal that exhibits a leak rate no greater than that which is defined herein. However, it is considered that the actual seal efficacy may perform better than this standard.

Additional or other techniques for coupling the electrode assembly 50 to the blank 34 include use of a bonding agent under the flange of the sleeve 51 (between the flange and the layer of second material 42), when such techniques are considered appropriate.

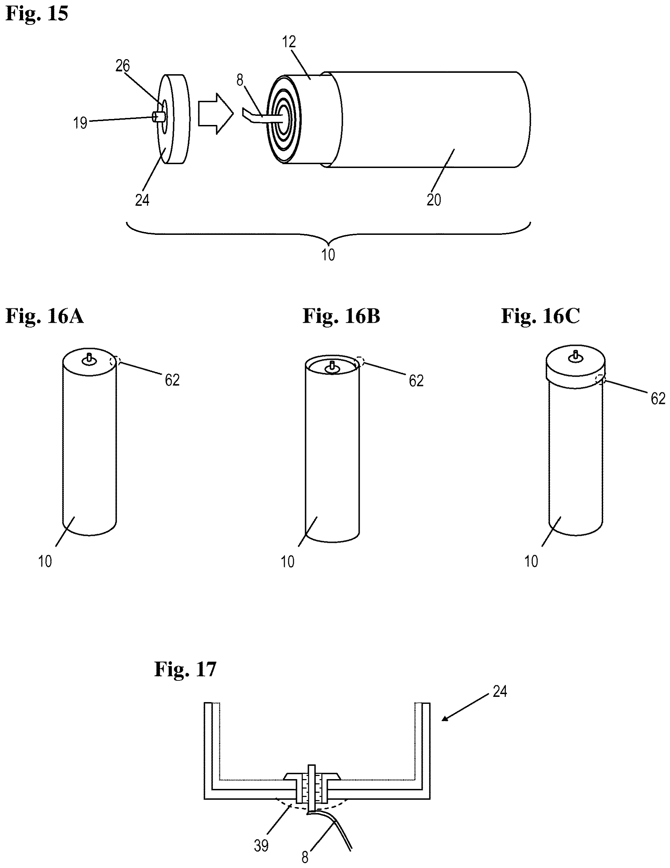

Referring now to FIG. 15, the energy storage cell 12 is disposed within the body 20. The at least one terminal 8 is coupled appropriately (such as to the feed-through 19), and the cap 24 is mated with the body 20 to provide for the ultracapacitor10.

Once assembled, the cap 24 and the body 20 may be sealed. FIG. 16 depicts various embodiments of the assembled energy storage (in this case, the ultracapacitor 10). In FIG. 16A, a flat blank 34 (see FIG. 12A) is used to create a flat cap 24. Once the cap 24 is set on the body 20, the cap 24 and the body 20 are welded to create a seal 62. In this case, as the body 20 is an annular cylinder, the weld proceeds circumferentially about the body 20 and cap 24 to provide the seal 62. In a second embodiment, shown in FIG. 16B, the concave blank 34 (see FIG. 12B) is used to create a concave cap 24. Once the cap 24 is set on the body 20, the cap 24 and the body 20 are welded to create the seal 62. In a third embodiment, shown in FIG. 16C, the convex blank 34 (see FIG. 12C) is used to create a convex cap 24. Once the cap 24 is set on the body 20, the cap 24 and the body 20 may be welded to create the seal 62.

As appropriate, clad material may be removed (by techniques such as, for example, machining or etching, etc,...) to expose other metal in the multi-layer material. Accordingly, in some embodiments, the seal 62 may include an aluminum-to-aluminum weld. The aluminum-to-aluminum weld may be supplemented with other fasteners, as appropriate.

Other techniques may be used to seal the housing 7. For example, laser welding, TIG welding, resistance welding, ultrasonic welding, and other forms of mechanical sealing may be used. It should be noted, however, that in general, traditional forms of mechanical sealing alone are not adequate for providing the robust hermetic seal offered in the ultracapacitor 10.

In some embodiments, the multi-layer material is used for internal components. For example, aluminum may be clad with stainless steel to provide for a multi-layer material in at least one of the terminals 8. In some of these embodiments, a portion of the aluminum may be removed to expose the stainless steel. The exposed stainless steel may then be used to attach the terminal 8 to the feed-through 19 by use of simple welding procedures.

Using the clad material for internal components may call for particular embodiments of the clad material. For example, it may be beneficial to use clad material that include aluminum (bottom layer), stainless steel and/or tantalum (intermediate layer) and aluminum (top layer), which thus limits exposure of stainless steel to the internal environment of the ultracapacitor 10. These embodiments may be augmented by, for example, additional coating with polymeric materials, such as PTFE.

In general, assembly of the housing often involves placing the storage cell 12 within the body 20 and filling the body 20 with the electrolyte 6. A drying process may be performed. Exemplary drying includes heating the body 20 with the storage cell 12 and electrolyte 6 therein, often under a reduced pressure (e.g., a vacuum). Once adequate (optional) drying has been performed, final steps of assembly may be performed. In the final steps, internal electrical connections are made, the cap 24 is installed, and the cap 24 is hermetically sealed to the body 20, by, for example, welding the cap 24 to the body 20.

Accordingly, providing a housing 7 that takes advantage of multi-layered material provides for an energy storage that exhibits leakage current with comparatively low initial values and substantially slower increases in leakage current over time in view of the prior art. Significantly, the leakage current of the energy storage remains at practical (i.e., desirably low) levels when the ultracapacitor 10 is exposed to ambient temperatures for which prior art capacitors would exhibit prohibitively large initial values of leakage current and / or prohibitively rapid increases in leakage current over time.

Additionally, the ultracapacitor 10 may exhibit other benefits as a result of reduced reaction between the housing 7 and the energy storage cell 12. For example, an effective series resistance (ESR) of the energy storage may exhibit comparatively lower values over time. Further, the unwanted chemical reactions that take place in a prior art capacitor often create create unwanted effects such as out-gassing, or in the case of a hermetically sealed housing, bulging of the housing 7. In both cases, this leads to a compromise of the structural integrity of the housing 7 and/or hermetic seal of the energy storage. Ultimately, this may lead to leaks or catastrophic failure of the prior art capacitor. These effects may be substantially reduced or eliminated by the application of a disclosed barrier.

Accordingly, users are now provided with a housing 7 for the energy storage, where a substantial portion up to all of the interior surfaces of the housing 7 are aluminum (and may include a non-interfering material, as described below). Thus, problems of internal corrosion are avoided and designers are afforded greater flexibility in selection of appropriate materials for the electrolyte 6.

By use of a multi-layer material (e.g., a clad material), stainless steel may be incorporated into the housing 7, and thus components with glass-to-metal seals may be used. The components may be welded to the stainless steel side of the clad material using techniques such as laser or resistance welding, while the aluminum side of the clad material may be welded to other aluminum parts (e.g., the body 20).

In some embodiments, an insulative polymer may be used to coat parts of the housing 7. In this manner, it is possible to insure that the components of the energy storage are only exposed to acceptable types of metal (such as the aluminum). Exemplary insulative polymer includes PFA, FEP, TFE, and PTFE. Suitable polymers (or other materials) are limited only by the needs of a system designer or fabricator and the properties of the respective materials. Reference may be had to FIG. 17, where a small amount of insulative material 39 is included to limit exposure of electrolyte 6 to the stainless steel of the sleeve 51 and the feed-through 19. In this example, the terminal 8 is coupled to the feed-through 19, such as by welding, and then coated with the insulative material 39.

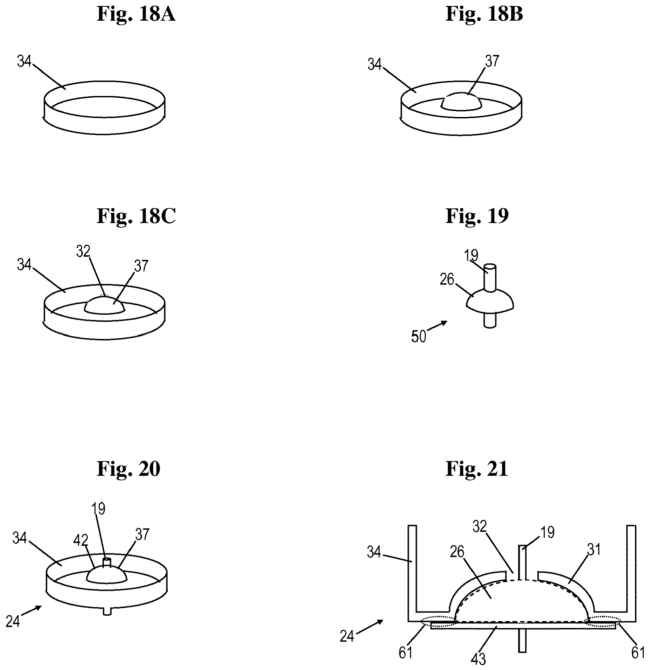

Refer now to FIG. 18 in which aspects of assembly another embodiment of the cap 24 are depicted. FIG. 18A depicts a template (i.e., the blank 34) that is used to provide a body of the cap 24. The template is generally sized to mate with the housing 7 of an appropriate type of energy storage cell (such as the ultracapacitor 10). The cap 24 may be formed by initially providing the template forming the template, including a dome 37 within the template (shown in FIG. 18B) and by then perforating the dome 37 to provide a throughway 32 (shown in FIG. 18C). Of course, the blank 34 (e.g., a circular piece of stock) may be pressed or otherwise fabricated such that the foregoing features are simultaneously provided.

In general, and with regard to these embodiments, the cap may be formed of aluminum, or an alloy thereof. However, the cap may be formed of any material that is deemed suitable by a manufacturer, user, designer and the like. For example, the cap 24 may be fabricated from steel and passivated (i.e., coated with an inert coating) or otherwise prepared for use in the housing 7.

Referring now also to FIG. 19, there is shown another embodiment of the electrode assembly 50. In these embodiments, the electrode assembly 50 includes the feed-through 19 and a hemispherically shaped material disposed about the feed-through 19. The hemispherically shaped material serves as the insulator 26, and is generally shaped to conform to the dome 37. The hemispheric insulator 26 may be fabricated of any suitable material for providing a hermetic seal while withstanding the chemical influence of the electrolyte 6. Exemplary materials include PFA (perfluoroalkoxy polymer), FEP (fluorinated ethylene-propylene), PVF (polyvinylfluoride), TFE (tetrafluoroethylene), CTFE (chlorotrifluoroethylene), PCTFE (polychlorotrifluoroethylene), ETFE (polyethylenetetrafluoroethylene), ECTFE (polyethylenechlorotrifluoroethylene), PTFE (polytetrafluoroethylene), another fluoropolymer based material as well as any other material that may exhibit similar properties (in varying degrees) and provide for satisfactory performance (such as by exhibiting, among other things, a high resistance to solvents, acids, and bases at high temperatures, low cost and the like).

The feed-through 19 may be formed of aluminum, or an alloy thereof. However, the feed-through 19 may be formed of any material that is deemed suitable by a manufacturer, user, designer and the like. For example, the feed-through 19 may be fabricated from steel and passivated (i.e., coated with an inert coating, such as silicon) or otherwise prepared for use in the electrode assembly 50. An exemplary technique for passivation includes depositing a coating of hydrogenated amorphous silicon on the surface of the substrate and functionalizing the coated substrate by exposing the substrate to a binding reagent having at least one unsaturated hydrocarbon group under pressure and elevated temperature for an effective length of time. The hydrogenated amorphous silicon coating is deposited by exposing the substrate to silicon hydride gas under pressure and elevated temperature for an effective length of time.

The hemispheric insulator 26 may be sized relative to the dome 37 such that a snug fit (i.e., hermetic seal) is achieved when assembled into the cap 24. The hemispheric insulator 26 need not be perfectly symmetric or of classic hemispheric proportions. That is, the hemispheric insulator 26 is substantially hemispheric, and may include, for example, slight adjustments in proportions, a modest flange (such as at the base) and other features as deemed appropriate. The hemispheric insulator 26 is generally formed of homogeneous material, however, this is not a requirement. For example, the hemispheric insulator 26 may include an air or gas filled torus (not shown) therein to provide for desired expansion or compressability.

As shown in FIG. 20, the electrode assembly 50 may be inserted into the template (i.e., the formed blank 34) to provide for an embodiment of the cap 24 that includes a hemispheric hermetic seal.

As shown in FIG. 21, in various embodiments, a retainer 43 may be bonded or otherwise mated to a bottom of the cap 24 (i.e., a portion of the cap 24 that faces to an interior of the housing 7 and faces the energy storage cell 12). The retainer 43 may be bonded to the cap 24 through various techniques, such as aluminum welding (such as laser, ultrasonic and the like). Other techniques may be used for the bonding, including for example, stamping (i.e., mechanical bonding) and brazing. The bonding may occur, for example, along a perimeter of the retainer 43. Generally, the bonding is provided for in at least one bonding point to create a desired seal 71. At least one fastener, such as a plurality of rivets may be used to seal the insulator 26 within the retainer 43.

In the example of FIG. 21, the cap 24 is of a concave design (see FIG. 12B). However, other designs may be used. For example, a convex cap 24 may be provided (FIG. 12C), and an over-cap 24 may also be used (a variation of the embodiment of FIG. 12C, which is configured to mount as depicted in FIG. 16C).

In some embodiments, at least one of the housing 7 and the cap 24 include materials that include a plurality of layers. For example, a first layer of material may include aluminum, with a second layer of material being stainless steel. In this example, the stainless steel is clad onto the aluminum, thus providing for a material that exhibits a desired combination of metallurgical properties. That is, in the embodiments provided herein, the aluminum is exposed to an interior of the energy storage cell (i.e., the housing), while the stainless steel is exposed to exterior. In this manner, advantageous electrical properties of the aluminum are enjoyed, while structural properties (and metallurgical properties, i.e., weldability) of the stainless steel are relied upon for construction. The multi-layer material may include additional layers as deemed appropriate. Advantageously, this provides for welding of stainless steel to stainless steel, a relatively simple welding procedure.

The material used for the cap as well as the feed-through 19 may be selected with regard for thermal expansion of the hemispheric insulator 26. Further, manufacturing techniques may also be devised to account for thermal expansion. For example, when assembling the cap 24, a manufacturer may apply pressure to the hemispheric insulator 26, thus at least somewhat compressing the hemispheric insulator 26. In this manner, there at least some thermal expansion of the cap 24 is provided for without jeopardizing efficacy of the hermetic seal.

While material used for construction of the body 20 includes aluminum, any type of aluminum or aluminum alloy deemed appropriate by a designer or fabricator (all of which are broadly referred to herein simply as "aluminum"). Various alloys, laminates, and the like may be disposed over (e.g., clad to) the aluminum (the aluminum being exposed to an interior of the body 20. Additional materials (such as structural materials or electrically insulative materials, such as some polymer-based materials) may be used to compliment the body and/or the housing 7. The materials disposed over the aluminum may likewise be chosen by what is deemed appropriate by a designer or fabricator.

Use of aluminum is not necessary or required. In short, material selection may provide for use of any material deemed appropriate by a designer, fabricator, or user and the like. Considerations may be given to various factors, such as, for example, reduction of electrochemical interaction with the electrolyte 6, structural properties, cost and the like.

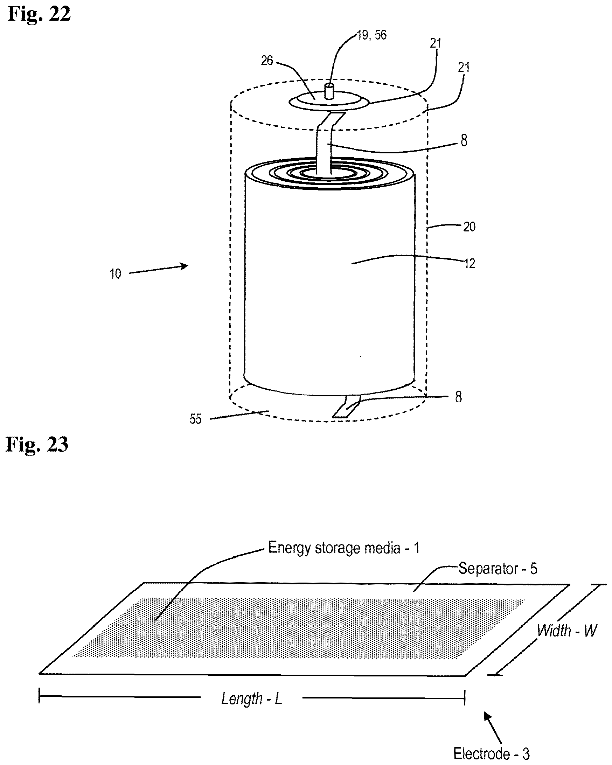

The storage cell 12 is now discussed in greater detail. Refer to FIG. 22, where a cut-away view of the ultracapacitor 10 is provided. In this example, the storage cell 12 is inserted into and contained within the body 20. Each plurality of leads are bundled together and coupled to the housing 7 as one of the terminals 8. In some embodiments, the plurality of leads are coupled to a bottom of the body 20 (on the interior), thus turning the body 20 into a negative contact 55. Likewise, another plurality of leads are bundled and coupled to the feed-through 19, to provide a positive contact 56. Electrical isolation of the negative contact 55 and the positive contact 56 is preserved by the electrical insulator 26. Generally, coupling of the leads is accomplished through welding, such as at least one of laser and ultrasonic welding. Of course, other techniques may be used as deemed appropriate.

It should be recognized that robust assembly techniques are required to provide a highly efficient energy storage. Accordingly, some of the techniques for assembly are now discussed.

Referring now to FIG. 23, components of an exemplary electrode 3 are shown. In this example, the electrode 3 will be used as the negative electrode 3 (however, this designation is arbitrary and merely for referencing).

As may be noted from the illustration, at least in this embodiment, the separator 5 is generally of a longer length and wider width than the energy storage media 1 (and the current collector 2). By using a larger separator 5, protection is provided against short circuiting of the negative electrode 3 with the positive electrode 3. Use of additional material in the separator 5 also provides for better electrical protection of the leads and the terminal 8.

Refer now to FIG. 24 which provides a side view of an embodiment of the storage cell 12. In this example, a layered stack of energy storage media 1 includes a first separator 5 and a second separator 5, such that the electrodes 3 are electrically separated when the storage cell 12 is assembled into a rolled storage cell 23. Note that the term "positive" and "negative" with regard to the electrode 3 and assembly of the ultracapacitor 10 is merely arbitrary, and makes reference to functionality when configured in the ultracapacitor 10 and charge is stored therein. This convention, which has been commonly adopted in the art, is not meant to apply that charge is stored prior to assembly, or connote any other aspect other than to provide for physical identification of different electrodes.

Prior to winding the storage cell 12, the negative electrode 3 and the positive electrode 3 are aligned with respect to each other. Alignment of the electrodes 3 gives better performance of the ultracapacitor 10 as a path length for ionic transport is generally minimized when there is a highest degree of alignment. Further, by providing a high degree of alignment, excess separator 5 is not included and efficiency of the ultracapacitor 10 does not suffer as a result.

Referring now also to FIG. 25, there is shown an embodiment of the storage cell 12 wherein the electrodes 3 have been rolled into the rolled storage cell 23. One of the separators 5 is present as an outermost layer of the storage cell 12 and separates energy storage media 1 from an interior of the housing 7.

"Polarity matching" may be employed to match a polarity of the outermost electrode in the rolled storage cell 23 with a polarity of the body 20. For example, in some embodiments, the negative electrode 3 is on the outermost side of the tightly packed package that provides the rolled storage cell 23. In these embodiments, another degree of assurance against short circuiting is provided. That is, where the negative electrode 3 is coupled to the body 20, the negative electrode 3 is the placed as the outermost electrode in the rolled storage cell 23. Accordingly, should the separator 5 fail, such as by mechanical wear induced by vibration of the ultracapacitor 10 during usage, the ultracapacitor 10 will not fail as a result of a short circuit between the outermost electrode in the rolled storage cell 23 and the body 20.

For each embodiment of the rolled storage cell 23, a reference mark 72 may be in at least the separator 5. The reference mark 72 will be used to provide for locating the leads on each of the electrodes 3. In some embodiments, locating of the leads is provided for by calculation. For example, by taking into account an inner diameter of the jelly roll and an overall thickness for the combined separators 5 and electrodes 3, a location for placement of each of the leads may be estimated. However, practice has shown that it is more efficient and effective to use a reference mark 72. The reference mark 72 may include, for example, a slit in an edge of the separator(s) 5.

Generally, the reference mark 72 is employed for each new specification of the storage cell 12. That is, as a new specification of the storage cell 12 may call for differing thickness of at least one layer therein (over a prior embodiment), use of prior reference marks may be at least somewhat inaccurate.

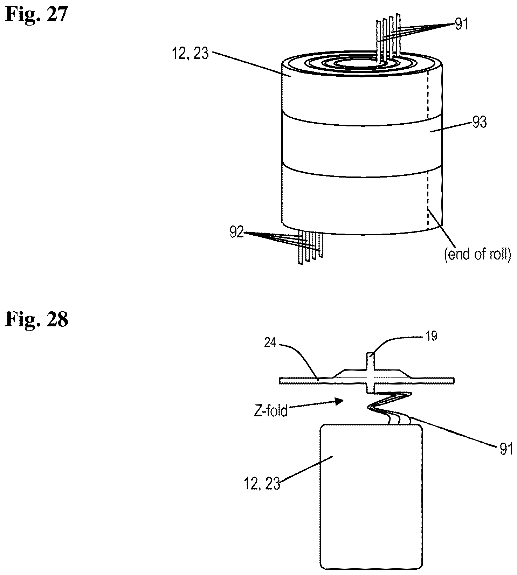

In general, the reference mark 72 is manifested as a single radial line that traverses the roll from a center thereof to a periphery thereof. Accordingly, when the leads are installed along the reference mark 72, each lead will align with the remaining leads (as shown in FIG. 27). However, when the storage cell 12 is unrolled (for embodiments where the storage cell 12 is or will become a roll), the reference mark 72 may be considered to be a plurality of markings (as shown in FIG. 26). As a matter of convention, regardless of the embodiment or appearance of marking of the storage cell 12, identification of a location for incorporation of the lead is considered to involve determination of a "reference mark 72" or a "set of reference marks 72."

Referring now to FIG. 26, once the reference mark 72 has been established (such as by marking a rolled up storage cell 12), an installation site for installation each of the leads is provided (i.e., described by the reference mark 72). Once each installation site has been identified, for any given build specification of the storage cell 12, the relative location of each installation site may be repeated for additional instances of the particular build of storage cell 12.

Generally, each lead is coupled to a respective current collector 2 in the storage cell 12. In some embodiments, both the current collector 2 and the lead are fabricated from aluminum. Generally, the lead is coupled to the current collector 2 across the width, W, however, the lead may be coupled for only a portion of the width, W. The coupling may be accomplished by, for example, ultrasonic welding of the lead to the current collector 2. In order to accomplish the coupling, at least some of the energy storage media 1 may be removed (as appropriate) such that each lead may be appropriately joined with the current collector 2. Other preparations and accommodations may be made, as deemed appropriate, to provide for the coupling.

Of course, opposing reference marks 73 may be included. That is, in the same manner as the reference marks 72 are provided, a set of opposing reference marks 73 may be made to account for installation of leads for the opposing polarity. That is, the reference marks 72 may be used for installing leads to a first electrode 3, such as the negative electrode 3, while the opposing reference marks 73 may be used for installing leads to the positive electrode 3. In the embodiment where the rolled storage cell 23 is cylindrical, the opposing reference marks 73 are disposed on an opposite side of the energy storage media 1, and offset lengthwise from the reference marks 72 (as depicted).

Note that in FIG. 26, the reference marks 72 and the opposing reference marks 73 are both shown as being disposed on a single electrode 3. That is, FIG. 26 depicts an embodiment that is merely for illustration of spatial (i.e., linear) relation of the reference marks 72 and the opposing reference marks 73. This is not meant to imply that the positive electrode 3 and the negative electrode 3 share energy storage media 1. However, it should be noted that in instances where the reference marks 72 and the opposing reference marks 73 are placed by rolling up the storage cell 12 and then marking the separator 5, that the reference marks 72 and the opposing reference marks 73 may indeed by provided on a single separator 5. However, in practice, only one set of the reference marks 72 and the opposing reference marks 73 would be used to install the leads for any given electrode 3. That is, it should be recognized that the embodiment depicted in FIG. 26 is to be complimented with another layer of energy storage media 1 for another electrode 3 which will be of an opposing polarity.

As shown in FIG. 27, the foregoing assembly technique results in a storage cell 12 that includes at least one set of aligned leads. A first set of aligned leads 91 are particularly useful when coupling the storage cell 12 in its form as a rolled storage cell 23 to one of the negative contact 55 and the positive contact 56, while a set of opposing aligned leads 92 provide for coupling the energy storage media 1 to an opposite contact (55, 56).

The rolled storage cell 23 may be surrounded by a wrapper 93. The wrapper 93 may be realized in a variety of embodiments. For example, the wrapper 93 may be provided as KAPTON™ tape (which is a polyimide film developed by DuPont of Wilmington DE), or PTFE tape. In this example, the KAPTON™ tape surrounds and is adhered to the rolled storage cell 23. The wrapper 93 may be provided without adhesive, such as a tightly fitting wrapper 93 that is slid onto the rolled storage cell 23. The wrapper 93 may be manifested more as a bag, such as one that generally engulfs the rolled storage cell 23 (e.g., such as the envelope 73 discussed above). In some of these embodiments, the wrapper 93 may include a material that functions as a shrink-wrap would, and thereby provides an efficient physical (and in some embodiments, chemical) enclosure of the rolled storage cell 23. Generally, the wrapper 93 is formed of a material that does not interfere with electrochemical functions of the ultracapacitor 10. The wrapper 93 may also provide partial coverage as needed, for example, to aid insertion of the rolled storage cell 23.

In some embodiments, the negative leads and the positive leads are located on opposite sides of the rolled storage cell 23 (in the case of a jelly-roll type rolled storage cell 23, the leads for the negative polarity and the leads for the positive polarity may be diametrically opposed). Generally, placing the leads for the negative polarity and the leads for the positive polarity on opposite sides of the rolled storage cell 23 is performed to facilitate construction of the rolled storage cell 23 as well as to provide improved electrical separation.

In some embodiments, once the aligned leads 91, 92 are assembled, each of the plurality of aligned leads 91, 92 are bundled together (in place) such that a shrink-wrap (not shown) may be disposed around the plurality of aligned leads 91, 92. Generally, the shrink-wrap is formed of PTFE, however, any compatible material may be used.

In some embodiments, once shrink-wrap material has been placed about the aligned leads 91, the aligned leads 91 are folded into a shape to be assumed when the ultracapacitor 10 has been assembled. That is, with reference to FIG. 28, it may be seen that the aligned leads assume a "Z" shape. After imparting a "Z-fold" into the aligned leads 91, 92 and applying the shrink-wrap, the shrink-wrap may be heated or otherwise activated such that the shrink-wrap shrinks into place about the aligned leads 91, 92. Accordingly, in some embodiments, the aligned leads 91, 92 may be strengthened and protected by a wrapper. Use of the Z-fold is particularly useful when coupling the energy storage media 1 to the feed-through 19 disposed within the cap 24.

Of course, other embodiments for coupling each set of aligned leads 91, 92 (i.e., each terminal 8) to a respective contact 55, 56 may be practiced. For example, in one embodiment, an intermediate lead is coupled to the one of the feed-through 19 and the housing 7, such that coupling with a respectice set of aligned leads 91, 92 is facilitated.

Materials used may be selected according to properties such as reactivity, dielectric value, melting point, adhesion to other materials, weldability, coefficient of friction, cost, and other such factors. Combinations of materials (such as layered, mixed, or otherwise combined) may be used to provide for desired properties.

In a variety of embodiments, it is useful to use a plurality of the ultracapacitors 10 together to provide a power supply. In order to provide for reliable operation, individual ultracapacitors 10 may be tested in advance of use. In order to perform various types of testing, each of the ultracapacitors 10 may be tested as a singular cell, in series or in parallel with multiple ultracapacitors 10 attached. Using different metals joined by various techniques (such as by welding) can reduce the ESR of the connection as well as increase the strength of the connections. Some aspects of connections between ultracapacitors 10 are now introduced.

In some embodiments, the ultracapacitor 10 includes two contacts. The two contacts are the glass-to-metal seal pin (i.e., the feed-through 19) and the entire rest of the housing 7. When connecting a plurality of the ultracapacitors 10 in series, it is often desired to couple an interconnection between a bottom of the housing 7 (in the case of the cylindrical form housing 7), such that distance to the internal leads is minimized, and therefore of a minimal resistance. In these embodiments, an opposing end of the interconnection is usually coupled to the pin of the glass-to-metal seal.

With regard to interconnections, a common type of weld involves use of a parallel tip electric resistance welder. The weld may be made by aligning an end of the interconnection above the pin and welding the interconnection directly to the pin. Using a number of welds will increase the strength and connection between the interconnection and the pin. Generally, when welding to the pin, configuring a shape of the end of the interconnection to mate well with the pin serves to ensure there is substantially no excess material overlapping the pin that would cause a short circuit.

An opposed tip electric resistance welder may be used to weld the interconnection to the pin, while an ultrasonic welder may used to weld the interconnection to the bottom of the housing 7. Soldering techniques may used when metals involved are compatible.

With regard to materials used in interconnections, a common type of material used for the interconnection is nickel. Nickel may be used as it welds well with stainless steel and has a strong interface. Other metals and alloys may be used in place of nickel, for example, to reduce resistance in the interconnection.

Generally, material selected for the interconnection is chosen for compatibility with materials in the pin as well as materials in the housing 7. Exemplary materials include copper, nickel, tantalum, aluminum, and nickel copper clad. Further metals that may be used include silver, gold, brass, platinum, and tin.

In some embodiments, such as where the pin (i.e., the feed-through 19) is made of tantalum, the interconnection may make use of intermediate metals, such as by employing a short bridge connection. An exemplary bridge connection includes a strip of tantalum, which has been modified by use of the opposed tip resistance welder to weld a strip of aluminum/copper/nickel to the bridge. A parallel resistance welder is then used to weld the tantalum strip to the tantalum pin.

The bridge may also be used on the contact that is the housing 7. For example, a piece of nickel may be resistance welded to the bottom of the housing 7. A strip of copper may then be ultrasonic welded to the nickel bridge. This technique helps to decrease resistance of cell interconnections. Using different metals for each connection can reduce the ESR of the interconnections between cells in series.

Having thus described aspects of a robust ultracapacitor 10 that is useful for high temperature environments (i.e., up to about 210 degrees Celsius), some additional aspects are now provided and / or defined.

A variety of materials may be used in construction of the ultracapacitor 10. Integrity of the ultracapacitor 10 is essential if oxygen and moisture are to be excluded and the electrolyte 6 is to be prevented from escaping. To accomplish this, seam welds and any other sealing points should meet standards for hermiticity over the intended temperature range for operation. Also, materials selected should be compatible with other materials, such as ionic liquids and solvents that may be used in the formulation of the electrolyte 6.

In some embodiments, the feed-through 19 is formed of metal such as at least one of KOVAR™ (a trademark of Carpenter Technology Corporation of Reading, Pennsylvania, where KOVAR is a vacuum melted, iron-nickel-cobalt, low expansion alloy whose chemical composition is controlled within narrow limits to assure precise uniform thermal expansion properties), Alloy 52 (a nickel iron alloy suitable for glass and ceramic sealing to metal), tantalum, molybdenum, niobium, tungsten, Stainless Steel 446 (a ferritic, non-heat treatable stainless steel that offers good resistance to high temperature corrosion and oxidation) and titanium.

The body of glass-to-metal seals that take advantage of the foregoing may be fabricated from 300 series stainless steels, such as 304, 304L, 316, and 316L alloys. The bodies may also be made from metal such as at least one of various nickel alloys, such as Inconel (a family of austenitic nickel-chromium-based superalloys that are oxidation and corrosion resistant materials well suited for service in extreme environments subjected to pressure and heat) and Hastelloy (a highly corrosion resistant metal alloy that includes nickel and varying percentages of molybdenum, chromium, cobalt, iron, copper, manganese, titanium, zirconium, aluminum, carbon, and tungsten).

The insulating material between the feed-through 19 and the surrounding body in the glass-to-metal seal is typically a glass, the composition of which is proprietary to each manufacturer of seals and depends on whether the seal is under compression or is matched. Other insulative materials may be used in the glass-to-metal seal. For example, various polymers may be used in the seal. As such, the term "glass-to-metal" seal is merely descriptive of a type of seal, and is not meant to imply that the seal must include glass.

The housing 7 for the ultracapacitor 10 may be made from, for example, types 304, 304L, 316, and 316L stainless steels. They may also be constructed from, but not limited to, some of the aluminum alloys, such as 1100, 3003,5052, 4043 and 6061. Various multi-layer materials may be used, and may include, for example, aluminum clad to stainless steel. Other non-limiting compatible metals that may be used include platinum, gold, rhodium, ruthenium and silver.

Specific examples of glass-to-metal seals that have been used in the ultracapacitor 10 include two different types of glass-to-metal seals. A first one is from SCHOTT with a US location in Elmsford, NY. This embodiment uses a stainless steel pin, glass insulator, and a stainless steel body. A second glass-to-metal seal is from HERMETIC SEAL TECHNOLOGY of Cincinnatti, OH. This second embodiment uses a tantalum pin, glass insulator and a stainless steel body. Varying sizes of the various embodiments may be provided.

An additional embodiment of the glass-to-metal seal includes an embodiment that uses an aluminum seal and an aluminum body. Yet another embodiment of the glass-to-metal seal includes an aluminum seal using epoxy or other insulating materials (such as ceramics or silicon).

A number of aspects of the glass-to-metal seal may be configured as desired. For example, dimensions of housing and pin, and the material of the pin and housing may be modified as appropriate. The pin can also be a tube or solid pin, as well as have multiple pins in one cover. While the most common types of material used for the pin are stainless steel alloys, copper cored stainless steel, molybdenum, platinum-iridium, various nickel-iron alloys, tantalum and other metals, some non-traditional materials may be used (such as aluminum). The housing is usually formed of stainless steel, titanium and / or various other materials.

A variety of fastening techniques may be used in assembly of the ultracapacitor 10. For example, and with regards to welding, a variety of welding techniques may be used. The following is an illustrative listing of types of welding and various purposes for which each type of welding may be used.

Ultrasonic welding may be used for, among other things: welding aluminum tabs to the current collector; welding tabs to the bottom clad cover; welding a jumper tab to the clad bridge connected to the glass-to-metal seal pin; and welding jelly roll tabs together. Pulse or resistance welding may be used for, among other things: welding leads onto the bottom of the can or to the pin; welding leads to the current collector; welding a jumper to a clad bridge; welding a clad bridge to the terminal 8; welding leads to a bottom cover. Laser welding may be used for, among other things: welding a stainless steel cover to a stainless steel can; welding a stainless steel bridge to a stainless steel glass-to-metal seal pin; and welding a plug into the fill port. TIG welding may be used for, among other things: sealing aluminum covers to an aluminum can; and welding aluminum seal into place. Cold welding (compressing metals together with high force) may be used for, among other things: sealing the fillport by force fitting an aluminum ball/tack into the fill port.

Physical aspects of an exemplary ultracapacitor 10 are now provided. Note that in the following tables, the terminology "tab" generally refers to the "lead" as discussed above; the terms "bridge" and "jumper" also making reference to aspects of the lead (for example, the bridge may be coupled to the feed-through, or "pin," while the jumper is useful for connecting the bridge to the tabs, or leads). Use of various connections may facilitate the assembly process, and take advantage of certain assembly techniques. For example, the bridge may be laser welded or resistance welded to the pin, and coupled with an ultrasonic weld to the jumper.

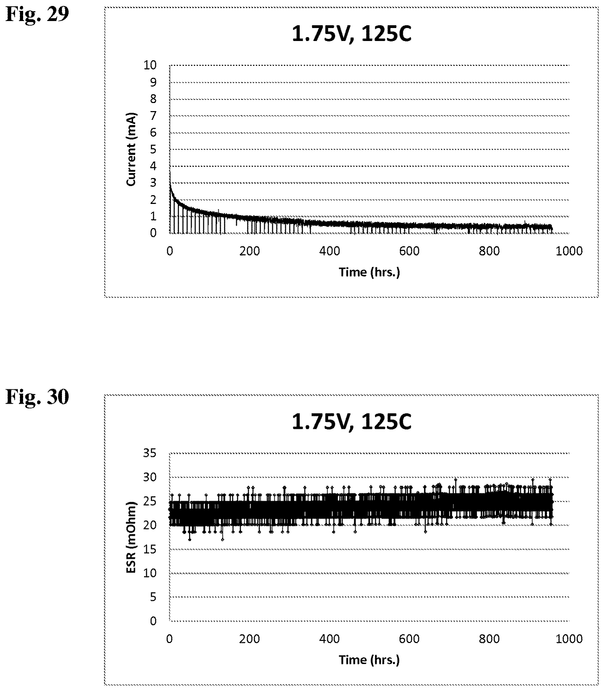

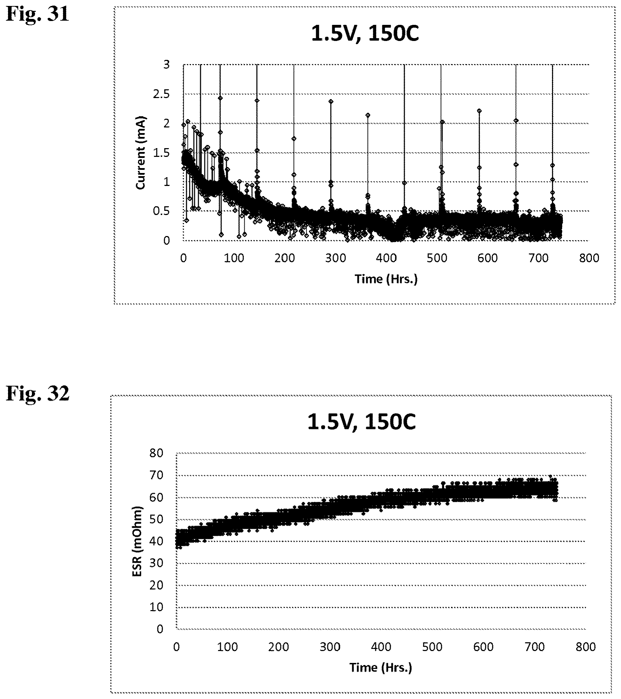

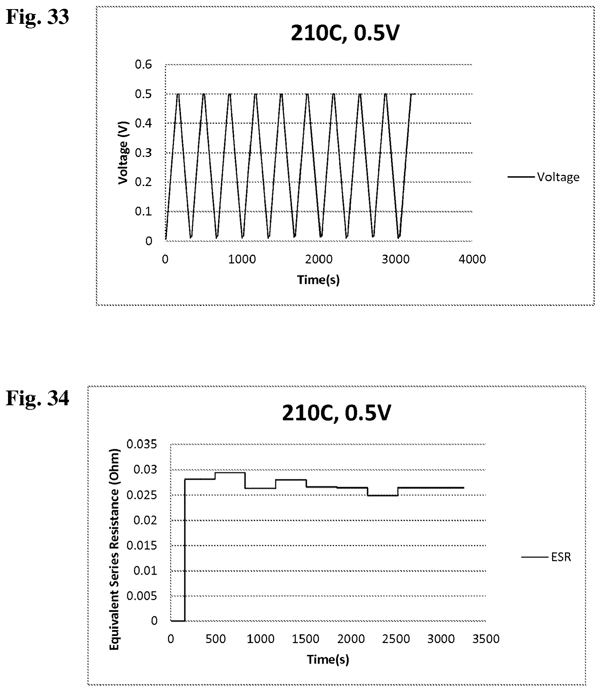

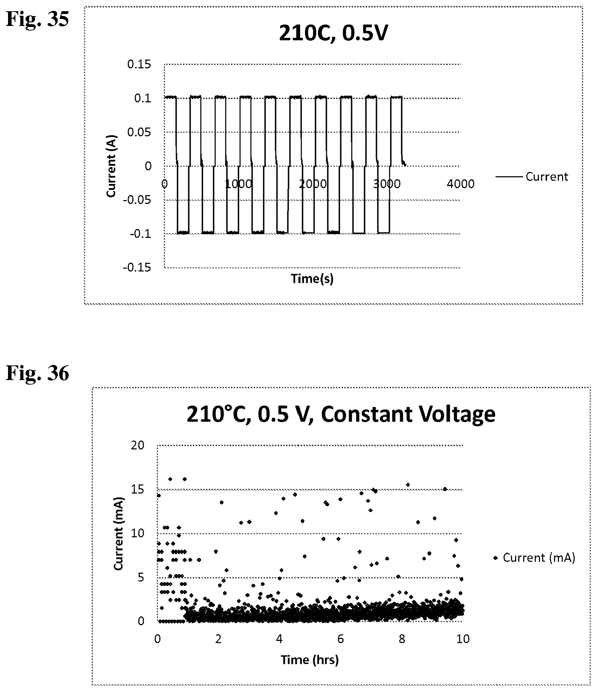

FIGS. 29 - 37 are graphs depicting performance of exemplary ultracapacitors 10, and depict performance of the ultracapacitor 10 at 1.75 volts and 125 degrees Celsius as well as performance of the ultracapacitor 10 at 1.5 volts and 150 degrees Celsius and performance of the ultracapacitor 10 at 0.5 volts and 210 degrees Celsius. In these latter examples (210 degrees Celsius), the ultracapacitor 10 was a closed cell (i.e., housing). The ultracapacitor was cycled 10 times, with a charge and discharge of 100mA, charged to 0.5 Volts, resistance measurement, discharged to 10mV, 10 second rest then cycled again.

Generally, the ultracapacitor 10 may be used under a variety of environmental conditions and demands. For example, terminal voltage may range from about 100 mV to 10 V. Ambient temperatures may range from about minus 40 degrees Celsius to plus 210 degrees Celsius. Typical high temperature ambient temperatures range from plus 60 degrees Celsius to plus 210 degrees Celsius.

Having thus described an exemplary energy storage device, aspects of the power supply 115 are now discussed in greater detail.

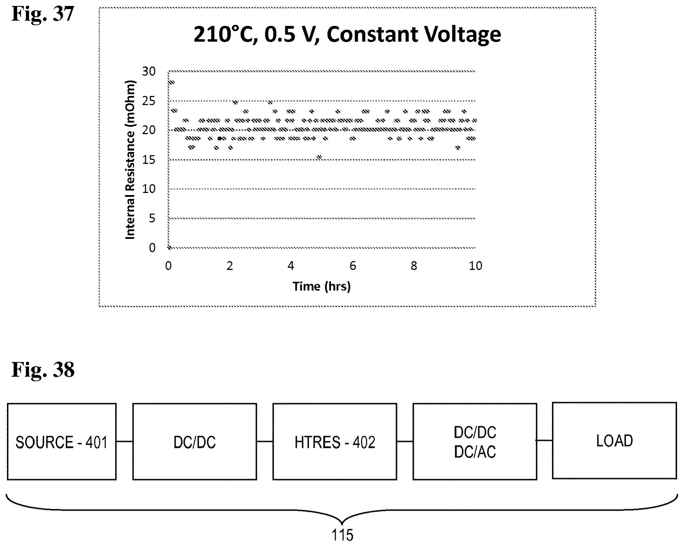

Referring now to FIG. 38, exemplary electronics are shown in communication with at least one source 401 (for example, the EG 210) and at least one high temperature rechargeable energy storage 402 (HTRES, which may be, for example, the ultracapacitor 10). In this non-limiting example, the power supply 115 includes a full wave rectifier and charger for charging the HTRES. An output of the power supply 115 may include a DC/DC power supply and/or a DC/AC power supply. Various power converters may be included in the power supply 115, and may be used between the source and the HTRES, as well as between the HTRES and a load.

The energy source 401 that is included in the power supply 115 may include a variety of energy inputs. The energy inputs may be generally divided into three categories. The categories include primary batteries, remote systems, and generators.

In some embodiments, the power supply includes a primary battery as a part of the energy source 401. Exemplary batteries include those that are adapted for operation in a harsh environment. Specific examples include various chemical batteries, including those with lithium. More specific examples include lithium-thionyl-chloride (Li-SOCl₂) and batteries based on similar technologies and/or chemistries. However, it is recognized that some of these technologies may not be capable of achieving the desired temperature ratings, and that some of these technologies may only support the energy storage on a short term basis (i.e., the energy storage may include, for example, elements that are not rechargeable, or that have a shortened life when compared with other elements). Other exemplary batteries that may be included in the power supply 115 include lithium-bromine-chloride, as well as lithium-sulfuryl-chloride and fused salt.

The source 401 may include at least one connection to a remote power supply. That is, energy may be supplied via an external source, such as via wireline. Given that external energy sources are not constrained by the downhole environment, the primary concern for receiving energy includes methods and apparatus for communicating the energy downhole. Exemplary techniques for communicating energy to the logging instrument 100 and the power supply 115 include wired casing, wired pipe, coiled tubing and other techniques as may be known in the art.

In one embodiment of a charger for the at least one ultracapacitor 10, the electronics include a dual mode feedback regulated buck (down) converter that limits its own current in the case of a low voltage on the at least one ultracapacitor 10 and regulates its voltage otherwise. In some embodiments, the regulated DC/DC converter includes a suitable topology for implementing a wide input voltage feedback regulated boost (up) converter for providing a stable voltage bus.

In general, it is desired that the source 401 is configured to provide a substantially continuous output power to sustain the charge on the HTRES 402, despite loads that draw charge and in some cases draw pulsed loads, such as those needed for telemetry bursts.

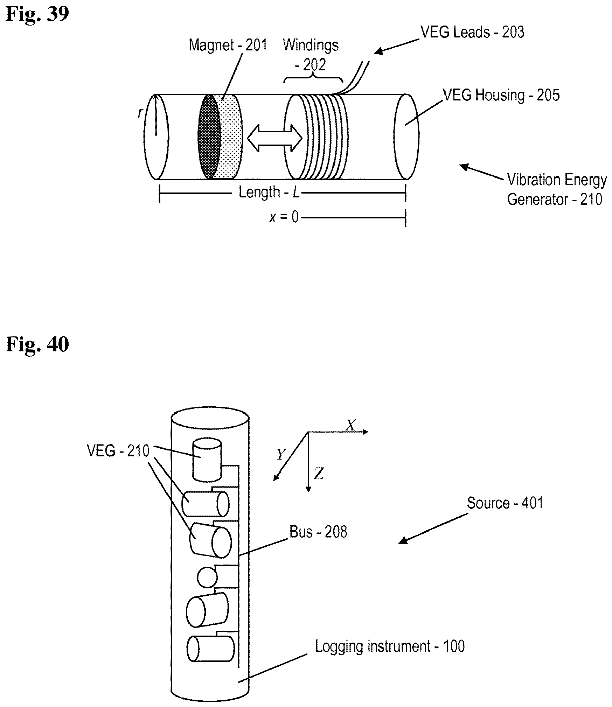

Referring now to FIG. 39, there is shown an energy generator 210 (EG). In this non-limiting embodiment, the energy generator 210 is adapted for harvesting vibrational energy that is experienced downhole. The vibrational energy may be experienced by the drill string 111, the logging instrument 100 as well as the power supply 115. In this exemplary embodiment, the energy generator 210 may also be referred to as a "vibrational energy generator 210."

Prior to discussing the vibrational energy generator (VEG) 210 in detail, it should be noted that the energy generator 210 may include a variety of other types of energy generation devices. The other types of energy generation devices may be used alone or in combination with each other, as well as with the vibrational energy generator (VEG) 210. Exemplary types of energy generators 210 include, without limitation, rotary generators, electromagnetic displacement generators, magnetostritive displacement generators, piezoelectric displacement generators, thermoelectric generators, thermophotovoltaic generators, and may include connections to remote generators, such as a wireline connection to a generator or power supply that is maintained topside. Aspects other types of generators (such as the foregoing) are considered further below.

Turning however, to the example where the energy generator 210 is a vibrational energy generator (VEG) 210, in some embodiments, the VEG 210 is generally contained within a VEG housing 205. In this example, the VEG housing 205 is a closed end, annular cylinder. Surrounding the VEG housing 205 is a set of windings 202. The windings 202 provide for converting a magnetic field into electrical energy, and communicating the electrical energy through VEG leads 203. The magnetic field is generated by the lateral movement of a permanent magnet 201 (having a mass, *m*). Generally, the permanent magnet 201 is subjected to vibrational energy, which drives the lateral movement. Lateral movement may be aided or encouraged by the addition of at least one biasing device (not shown). Exemplary biasing devices include rubber bumpers, springs, at least one additional permanent magnet 201 have an opposite facing pole. In one such embodiment, a permanent magnet 201 is mounted internally at each end of the VEG housing 205, with an opposing pole facing inwardly into the VEG housing 205. A central permanent magnet 201 is then arranged with its respective poles opposing the poles of each mounted magnet. Thus, the central permanent magnet 201 is biased into a center of the VEG 210, and able to oscillate freely when subjected to vibrational energy.

While the VEG 210 may include at least one biasing device, in some embodiments, the VEG 210 may include a pressure relief device (not shown). Non-limiting examples include at least one form of venting such as a vent tube or at least one hole in the permanent magnet 201 (to prevent relative pressurization of one part of the VEG 210). In some embodiments, the VEG 210 is sealed in a vacuum such that aerodynamic forces are relatively inconsequential to operation of the VEG 210. Exemplary biasing devices include rubber dampers, mechanical springs, piezoelectric springs and at least one additional permanent magnet.

Refer also now to FIG. 40, where a plurality of VEG 210 are shown. In this example, the VEG 210 are disposed within the drill string 111, speficically, within the logging instrument 100. The plurality of VEG 210 are coupled together electrically via a bus 208. The bus 208 is coupled in turn to other electronics for charging the energy storage, such as a plurality of the ultracapacitors 10.

It may be seen that the plurality of VEG 210 may be arranged within the logging instrument 100 such that vibrational energy will drive at least one of the VEG 210 on a virtually continuing basis. That is, in this example, the VEG 210 are disposed along each major axis (*X*, *Y*, and *Z*) as well as major divisions thereof.

Aspects of an exemplary design of the VEG 210 adapted to satisfy load demand are now considered. Assuming a sinusoidal x-displacement of the permanent magnet 201 of the full length of the VEG housing 205, x(t) = ½ L sin(ωt) [*m*], the velocity is its time derivative and the peak velocity magnitude of the permanent magnet 201 is ½ L co [m/s]. The peak kinetic energy is ½ m v² = ½ *m* (½ L ω)² [J] so that the power available in the low electrical resistance limit is P = ½ *m* (½ L ω)² f_{vib} [W] where f_{vib} is the vibrational frequency and ω = 2π f_{vib} [rps]. The open circuit potential available from the windings 202 may be approximated using a piecewise linear approximation to the time varying magnetic flux through the area, *A*, circumscribed by the windings 202. The time derivative of the magnetic flux is then approximately dΦB/dt= +/- Bₘₐₓ *A* 4 f_{vib}. However, in some embodiments, the harvesting electronics wil¹ incorporate a rectifier so the sign does not matter. From Maxwell's equations, the open circuit voltage of the windings 202 may be approximated as V_{oc} = N dΦB/dt = N Bₘₐₓ *A* 4 f_{vib} where the sign has been neglected. Given a series resistance of the windings 202 (where the windings 202 are fabricated from copper), the power available in the low mass limit is V*_{oc}*²/4_{R} where R = N C RAWG [Ω] and C is the circumference of the VEG housing 205.

Some exemplary design inputs include: f_{vib} = 10 Hz; L = 2 in.; r = ½ in.; *m* = 100 g; N = 100 (for copper); and dimensions of the permanent magnet 201 are 1 inch diameter; 3/8 in. nominal length, and composed of samarium cobalt.

In this example, a low resistance limit power available is 5 W. With copper windings 202 having a wire gauge of 30 AWG, R is approximately 3 Ohms, and the low mass limit power available is approximately 200 W. Thus, this design is limited by the mass, *m*, of the permanent magnet 201, not the electrical resistance of the windings 202. By extrapolation, the power available will be 10 W for the permanent magnet 201 having a mass, *m*, of 200 g and 1 W for a the permanent magnet 201 having a mass, *m*, of 20 g. With the permanent magnet 201 having a mass, *m*, of 20 g, the maximum resistance, R, of the wire allowable to support the power available is R = 50²/(4^{∗}1) is 625 Ohms. Even with a wire gauge of 30 AWG, the electrical resistance would be only 3 Ohms so any reasonable wire gauge could be used in this design. Smaller wire gauges (larger AWG values) may be used to save space, for instance.

This analysis has assumed that the windings 202 are substantially confined to a length that is small compared to the length of the cylinder, *L*, and that the vibrational oscillations of the permanent magnet 201 are periodic and sinusoidal yielding a displacement equal to the full length, *L*, of the VEG housing 205 (e.g. 2 in.).

Further adaptations of the vibrational energy generator VEG 210 may be made. Consider that in the downhole environment, the vibration experienced by VEG 210 may occur over a range of frequencies, for example from tens of hertz to hundreds of hertz. In this case, the VEG 210 may include a natural frequency that can be tuned during operation of the device by changing the restoring force of biasing devices. For example, if the biasing devices are two permanent magnets 201, the magnets 201 may be brought closer together by, for example, a linear actuator. Bringing the magnets 201 closer together thereby increases the restoring force and increasing the natural frequency of the VEG 210. Likewise, the permanent magnets 201 could be moved farther apart to similarly decrease the resonant frequency of the VEG 210. Additionally, if the biasing devices are electromagnets, the current through the electromagnets could be increased or decreased to increase or decrease the resonant frequency of VEG 210, respectively.

If piezoelectric springs are used within VEG 210, they may be used to serve as a biasing device, providing a restoring force to magnet 201 as well as to provide for additional electric generation.

The mechanical resonant frequency of VEG 210 containing piezoelectric biasing elements may be changed by altering the electromechanical coupling of the piezoelectric element. For example, electromechanical coupling of a piezoelectric element may be altered by electrically shunting a capacitance across the piezoelectric element, thereby changing the effective mechanical stiffness of the piezoelectric element. Altering the mechanical stiffness of the piezoelectric element changes the resonant frequency of VEG 210.

It should be noted that the mechanical natural frequency, ωₙ, of VEG 210 may be simply defined as sqrt(*k*/*m*) where *k* represents the stiffness of the biasing spring and *m* represents the mass of the resonator. In one embodiment, a tuning circuit may be used to alter the electromechanical coupling of the piezoelectric element to change a portion of *k*, thereby changing the mechanical natural frequency, ωₙ. In some embodiments, the tuning circuit includes a microprocessor.

It should be noted that various elements can be used as electromechanical coupling to the piezoelectric element, including capacitance, resistance, inductance, or a combination of such elements either in series or parallel.

The piezoelectric elements may serve as an additional source of electric generation while simultaneously serving as a tunable spring element. For example, the power generated by the piezoelectric element can be harvested by a power converter. In the case of a switching power converter, the power converter can be modeled as a load resistance that varies proportional to the duty cycle of the switching power converter.

The Curie temperature of a permanent magnet is the temperature at which the magnet becomes demagnetized. Curie temperatures for materials for the permanent magnet 201 are shown in the table below. So-called Neodymium magnets (first two rows) are popular for their high magnetic remanence. Using Samarium Cobalt for the permanent magnet 201 is considered for higher temperature operations, as these magnets will exhibit similar remanence levels with higher Curie temperatures. Such magnets are readily available through commercial distribution channels.

**Table 4**

| Comparison of Materials for the Permanent Magnet | | |
|---|---|---|
| Material | Remanence (T) | Curie Temp. (°C) |
| Nd₂Fe₁₄B (sintered) | 1.0-1.4 | 310-400 |
| Nd₂Fe₁₄B (bonded) | 0.6-0.7 | 310-400 |
| SmCo₅ (sintered) | 0.8-1.1 | 720 |
| Sm(Co, Fe, Cu, Zr)₇ (sintered) | 0.9-1.15 | 800 |
| Alnico (sintered) | 0.6-1.4 | 700-860 |
| Sr-ferrite (sintered) | 0.2-0.4 | 450 |

High-temperature electronics are used to provide for signal conditioning, telemetry and power electronics, and are generally adapted for operation at temperatures up to as high as about 200 degrees Celsius, and in some embodiments, up to about 300 degrees Celsius. Non-limiting embodiments of high-temperature electronics include discrete and integrated off-the-shelf bare die silicon and silicon-on-insulator active devices as well as silicon carbide active power devices. Some commercially available high temperature rated and low temperature coefficient ceramic passives (COG or NPO dielectrics) and high temperature magnetic passives may be used. In exemplary embodiments, substrate material for circuitry will be AIN (aluminum nitride) ceramics, which are chosen for excellent thermal stability and thermal conductivity. In some of these embodiments, circuit interconnects will be oxidation resistant Au traces. Bonding strategies will employ flip chip or Au wire bonding for bare die active components using AuGe high temperature solder, and/or similar types of bonding. However, for some implementations it is expected that Au wire bonding be advantageous over flip chip bonding due to the added mechanical compliance especially in the presence of thermal expansion and shock and vibration. A non-exhaustive list of suppliers for all of the components above is included in the table below:

**Table 5**

| High Temperature Circuit Component Suppliers | |
|---|---|
| Component | Vendor |
| SiC Bare Die Transistors | Micross Components, Los Angeles, CA |
| SiC Bare Die Schottky Diodes | Micross Components, CA |
| Si and SOI Bare Die linear and digital circuits | Minco Technology Labs LLC, Austin, TX |
| Ceramic Surface Mount CGO, NPO capacitors | Digikey, Minneapolis, MN |
| Ceramic Surface Mount Resistors | Digikey, Minneapolis, MN |
| Bare Die Magnetics | Minco Technology Labs LLC, Austin, TX |
| Ceramic Printed Circuit Board | Complete Hermetics, Santa Ana, CA |
| Terminals, Headers, Packages | HCC Ametek Ind., New Bedford, MA |
| AuGe Solder | Hi-Rel Alloys, Ontario CA |

In summary, the teachings herein provide for a reliable power supply in downhole tools that is available for use in high temperature environments.

In some embodiments, the power supply 115 includes a single VEG 210 with accompanying electronics and at least one ultracapacitor 10. In other embodiments, the power supply 115 includes a plurality of VEG 210 with accompanying electronics and at least one ultracapacitor 10. The VEG 210 may be coupled to the electronics in a parallel or in a serial arrangement, or in some combination, as deemed appropriate. The orientation of each of the various VEG 210 may be selected as determined to be appropriate for harvesting vibrational energy with or without consideration for the number of VEG 210 elements.

The VEG 210 respond to vibrations in the logging instrument 100 by generating electrical power. The varied angular distribution of the VEG 210 ensures that at least one of the assemblies will appropriately respond to the vibration and generate electrical power therefrom.

Any number and any orientation of the VEG 210 may be used. For example, there could be four of the VEG 210, instead of three, and they could be angularly spaced in different orientations, such as by positioning the assemblies orthogonal to each other, etc.

Of course, the VEG 210 may be differently configured, without departing from the principles of the present invention. For example, the magnet 201 may be an electromagnet. As another example, the coil 202 may be rigidly mounted, with the magnet 201 displacing in response to vibration of the logging instrument 100.

It will be readily appreciated that the displacement of the coil 202 relative to the magnet 201 also has a natural frequency, which may also be adjusted, for example, by changing the restoring force of the biasing devices mentioned above, changing the mass of the coil 202, etc. It will further be appreciated that increased displacement of the coil 202 relative to the magnet 201 may be achieved by matching the natural frequency of the VEG 210 to the natural frequency of vibration in the logging instrument 100. In this way, the VEG 210 will vibrate at a frequency that will produce maximum electrical power output.

The VEG 210 shown in FIG. 39 is an example of a "through coil" configuration whereby a permanent magnet moves relatively through a set of coils. In another configuration, commonly referred to as an "across coil configuration", a permanent magnet moves in a perpendicular direction in relative motion to the surface defined by the coils.

A single magnet or multiple magnets may be used. Multiple magnets may be connected to move together or left unconnected to move individually. The magnets may be arranged so that adjacent magnets are characterized by opposite polarizations. In this configuration, the opposing magnet poles enhance magnetic flux density surrounding the junctions of adjacent magnets. The conducting coils may be placed in the vicinity of the magnet junction such that movement of the magnets creates larges deviations in the magnetic flux through the coils. Consequently, the device may operate under smaller relative motion than the "through hole" configuration.

A single coil or multiple coils may be incorporated. Multiple coils can overlap or not overlap and may contain multiple loops of conducting wire. The coils may be arranged in order to provide separate alternating currents with relative phases. For instance, sets of three offset coils may be used to provide relative phases of 0, 120, and 240 degrees. This may be accomplished by selecting an appropriate offset between adjacent coils that is proportional to the dimensions of the magnets. The use of three phase induced currents reduces ripple effects in power generation.

Different paths for either the permanent magnets, if the permanent magnets are moving relative to fixed coils, or the coils, if the coils are moving relative fixed magnets, are suitable for capturing different modes of vibrations. For example, lateral vibration may be captured through the linear relative movement of the magnet and coil pair. To capture torsional vibration, the path may consist of a circle whereby the magnet or coils are free to move around the circular path. In the case that the magnets are moving in the circular path across a fixed set of coils, the magnets may make up a part of the entirety of the circle.

In both "through hole" and "across coil" configurations, the use of flux focusing material to increase flux density may be used. The flux focusing material has high permeability and high flux density and may be composed of, for example soft iron, mu-metal, or another metal or metal alloy containing similar characteristics. The flux focusing material may be placed to concentrate magnetic flux through a set of coils and may or may not be fixed to the permanent magnet. The flux focusing material may also serve to provide a return path for the magnetic flux.

As with the "through-hole" configuration already discussed, piezoelectric springs may be utilized to enhance power generation and provide a tunable resonant frequency.

If the mechanical energy source is in the form of a flow induced rotation, the electromagnetic generator may take the form a standard DC electric generator whereby conducting coils are rotated around a central axis such that a magnetic field passes across the plane of each set of coil with each rotation.

As mentioned above, other types of energy generators 210 include, without limitation, rotary generators, electromagnetic displacement generators, magnetostrictive displacement generators, piezoelectric displacement generators, thermoelectric generators, thermophotovoltaic generators, and may include connections to remote generators, such as a wireline connection to a generator or power supply that is maintained topside, and a radioisotope power generator.

Rotary types of generators may include, for example, generators that rely on fluid (liquid or gas or a mixture) induced rotation, a single-stage design, a multi-stage and may be redundant.

Electromagnetic displacement types of generation may rely upon, for example, drill string vibration (wanted or unwanted), acoustic vibration, seismic vibration, flow-induced vibration (such as from mud, gas, oil, water, etc.) and may include generation that is reliant upon reciprocating motion.

Magnetostrictive types of generation are reliant on magnetostriction, which is a property of ferromagnetic materials that causes them to change their shape or dimensions during the process of magnetization. Magnetostrictive materials can convert magnetic energy into kinetic energy, or the reverse, and are used to build actuators and sensors. As with electromagnetic displacement types of generation, magnetostrictive types of generation may rely upon, for example, drill string vibration (wanted or unwanted), acoustic vibration, seismic vibration, flow-induced vibration (such as from mud, gas, oil, water, etc.) and may include generation that is reliant upon reciprocating motion, as well as other techniques that generate or result in a form of kinetic or magnetic energy.

Piezoelectric types of generation are reliant on materials that exhibit piezoelectric properties. Piezoelectricity is the charge that accumulates in certain solid materials (notably crystals, certain ceramics, and the like) in response to applied mechanical stress. Piezoelectric types of generation may rely upon, for example, drill string vibration (wanted or unwanted), acoustic vibration, seismic vibration, flow-induced vibration (such as from mud, gas, oil, water, etc.) and may include generation that is reliant upon reciprocating motion, as well as other techniques that generate or result in a form of mechanical stress.

The piezoelectric effect can be utilized to convert mechanical energy into electrical energy. For example, a piezoelectric element may be constructed in the form of a cantilevered beam, whereby movement of the end of the beam bends the beam under vibration. The piezoelectric element may also be constructed as a platter, whereby vibration causes distortion in the center of the platter. In each configuration, varying mass loads may be used to enhance the effect of the mechanical vibration. For instance, a mass may be placed on the end of the cantilevered beam to increase the level of deflection incurred on the beam caused by mechanical vibration of the system.

In some embodiments, a piezoelectric electric generator includes one to many piezoelectric elements, each element provided to convert mechanical energy into electrical current. The piezoelectric electric generator may also include one to many conducting elements to transfer the electrical current to energy conversion or storage electronics. Each piezoelectric generator may be configured in plurality to enhance energy generation capabilities. The piezoelectric generators may be placed in suitable directions to capture various modes of mechanical vibration. For instance, in order to capture three dimensions of lateral vibration, the piezoelectric generators may be placed orthogonal to each other such that each dimension of vibration is captured by at least one set of piezoelectric generators.

Generally, piezoelectric generators are useful for generating up to a watt of electric power. However, multiple generators may be used in parallel to generate additional power. In one embodiment, a single mass may be configured to deform multiple piezoelectric elements at a given time.

Like the electromagnetic generators, piezoelectric generators operate with a given natural frequency. The most power is generated when the mechanical vibration occurs at the natural frequency of the piezoelectric generator. In order to maximize the amount of generated power, the natural frequency of the piezoelectric generator may be tuned, as previously discussed, by including varying load elements to the conducting material. In another embodiment, there may be multiple piezoelectric generators tuned to different fixed frequencies to capture a range of vibration frequencies. Dampening in the form of a material attached to the piezoelectric element or a fluid surrounding the piezoelectric element may be used to broaden the effective capture spectrum of the piezoelectric generator while decreasing the resonant response.

In one embodiment where the mechanical energy source is in the form of fluid flow, a rotation based piezoelectric generator may be used. For example, one to many piezoelectric elements may be deformed due to the rotation of a structure. In one embodiment, one to many piezoelectric beams may be bent by orthogonal pins attached to a rotating wheel. As the wheel rotates around its axis, the pins contact the piezoelectric elements and cause deformation of the elements as the wheel rotates. In another embodiment, piezoelectric elements are placed parallel to and adjacent to a rotating body of varying radii. As the rotating body rotates, the piezoelectric elements are compressed to varying degrees depending on the radius at the contact point between the rotating body and the piezoelectric element. In this embodiment, there may be piezoelectric elements also placed on the rotating body to produce additional electrical energy.

Thermoelectric types of generation are reliant on materials that exhibit thermoelectric properties. Thermoelectric generators generally convert heat flow (temperature differences) directly into electrical energy, using a phenomenon called the "Seebeck effect" (or "thermoelectric effect"). Exemplary thermoelectric generators may rely on bimetallic junctions (a combination of materials) or make use of particular thermoelectric materials. One example of a thermoelectric material is bismuth telluride (Bi₂Te₃), a semiconductor with p-n junctions that can have thicknesses in the millimeter range. Generally, thermoelectric generators are solid state devices and have no moving parts.

Thermoelectric generators may be provided to take advantage of various temperature gradients. For example, a temperature differential inside and outside of pipe, a temperature differential inside and outside of casing, a temperature differential along drill string, a temperature differential arising from power dissipation within tool (from electrical and/or mechanical energy), and may take advantage of induced temperature differentials.

Thermophotovoltaic generators provide for energy conversion of heat differentials to electricity via photons. In a simple form, the thermophotovoltaic system includes a thermal emitter and a photovoltaic diode cell. While the temperature of the thermal emitter varies between systems, in principle, a thermophotovoltaic device can extract energy from any emitter with temperature elevated above that of the photovoltaic device (thus forming an optical heat engine). The emitter may be a piece of solid material or a specially engineered structure. Thermal emission is the spontaneous emission of photons due to thermal motion of charges in the material. In the downhole environment, ambient temperatures cause radiation mostly at near infrared and infrared frequencies. The photovoltaic diodes can absorb some of these radiated photons and convert them into electrons.

Other forms of power generation may be used. For example, radioisotope power generation may be incorporated into the power supply 115, which converts ions into a current.

A variety of techniques may be employed for incorporating the foregoing types of power generators into the drill string 111. For example, piezoelectric elements may be included into a design in order to supply intermittent or continuous power to electronics. The down-hole environment offers numerous opportunities for piezoelectric power generation due to the abundance of vibration, either wanted or unwanted, through acoustic, mechanical, or seismic sources.n

There are three primary modes of vibration in a down-hole drill string; drill collar whirl, bit bounce, and collar stick-slip. Each of these modes is capable of coupling into each other, causing lateral, torsional, and axial vibrations.

In a down-hole instrument, there are numerous locations that offer a potential for energy harvesting. The instrument may be composed of separate sections that are directly connected through rigid supports, left connected through a flexible connection, or left unconnected by material other than piezoelectric elements. A flexible connection may be comprised of a flexible membrane or pivoting rigid structure.

To capture energy from torsional vibration, piezoelectric material can be placed vertically along the length of the instrument. Torsional stresses between sections of the instrument may cause the piezoelectric element to deform. A conducting material can be placed along the piezoelectric element to carry generated current to energy storage or conversion devices.

In another embodiment, piezoelectric material can be utilized to generate energy from axial vibration. For instance, piezoelectric element can be placed between two or more compartments that are otherwise left unconnected or connected flexible connection. Each end of the piezoelectric element may be connected to the surface of the instrument orthogonal to the axial and tangential direction such that axial vibration will compress or extend the piezoelectric element.

In another embodiment, piezoelectric material can be utilized to generate energy from lateral vibration. For instance, piezoelectric element may be placed between two or more compartments that are otherwise left unconnected or connected via a flexible connection. The ends of the piezoelectric elements may be attached to the tangential walls of each compartment such that relative shear movement of each compartment bends the connecting piezoelectric elements.

One or many of these embodiments may be included into the same instrument to enhance energy generation.

In short, the power supply 115 may make use of any type of power generator that may be adapted for providing power in the downhole environment. The types of power generation used may be selected according to the needs or preferences of a system user, designer, manufacturer or other interested party. A type of power generation may be used alone or in conjunction with another type of power generation.

It should be noted that as in the case of the vibrational energy generator, other forms of generators may also be controlled (i.e., tuned) to improve efficiency according to environmental factors. In each case, it is considered that "tuning" of the generator is designed to accomplish this task. In some cases, tuning is provided during assembly. In some additional embodiments, tuning is performed on a real-time, or near real-time basis during operation of the power supply 115.

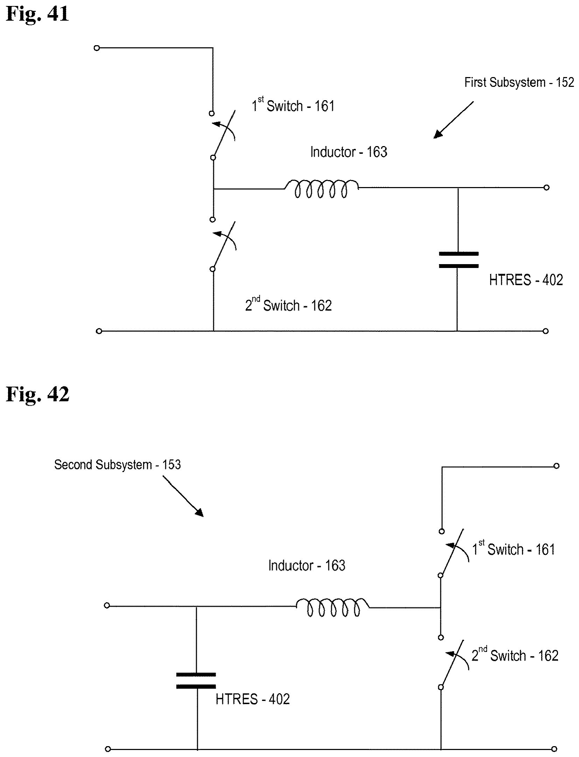

Refer now to FIGS. 41 - 47, where aspects of power conversion circuits are shown. As shown in FIG. 41, an exemplary embodiment of the first subsystem 152 includes a first switching device 161, and a second switching device 162 as well as a filter inductor 163. The external energy supply 151 may couple to the first subsystem 152 and to the HTRES 402 (for example, a high temperature ultracapacitor). The action of the first switching device 161 and the second switching device 162 may be controlled to achieve current limiting and battery conditioning features described above. Specifically, the relative on-time of the first switching device 161 and the second switching device 162 operating in a complimentary fashion (duty ratio) may be used to adjust the conversion ratio and the flow of current. The exemplary first subsystem 152 shown in FIG. 41 may be useful when voltage of the external energy supply 151 is larger in value when compared to voltage of the HTRES 402. Current limiting or regulation may be achieved by way of a feedback control system (not shown).

An exemplary embodiment of the second subsystems 153 includes power converters either DC-DC or DC-AC depending on the tool requirements. A function of a second subsystem 153 may be to regulate the voltage or current delivered to the load (for example, the logging instrument 100 and/or the downhole electronics 113). Due to a capacitive nature of the HTRES 402, when implanted with an ultracapacitor, voltage of may decrease in an approximately linear fashion as charge is withdrawn from the HTRES 402. A function of the second subsystem 153 then may be to regulate the voltage or current delivered to the logging instrument 100, despite the varying voltage presented by the HTRES 402. Voltage limiting or regulation may be achieved by way of a feedback control system (not shown).

As shown in FIG. 42, an exemplary embodiment of the second subsystem 153 may include respective embodiments of the first switching device 161, the second switching device 162 as well as the filter inductor 163. The load may couple to the second subsystem 153 and to the HTRES 402. The action of the respective embodiments of the first switching device 161 the second switching device 162 may be controlled to achieve desired current or voltage regulation features described above. Specifically, the duty ratio of the relative on-time of the respective embodiments of the first switching device 161 and the second switching device 162 may be used to adjust the conversion ratio and the flow of current or the presented voltage. The exemplary second subsystem 153 shown in FIG. 42 may be useful when the voltage required is larger in value when compared to the voltage of the HTRES 402. Voltage limiting or regulation may be achieved by way of a feedback control system (not shown).

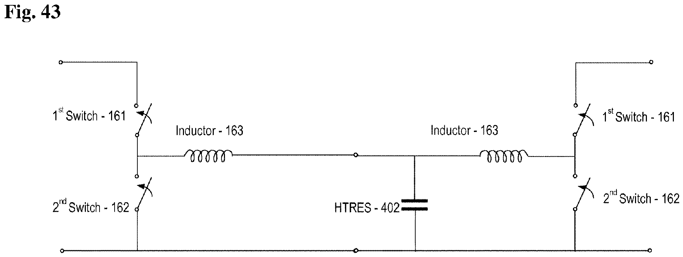

As shown in FIG. 43, the first subsystem 152 and the second subsystems 153 may be coupled together and to the HTRES 402 as well to provide an embodiment of the power supply 115. In this embodiment, the exemplary power supply 115 may be particularly advantageous when the terminal voltage of the external energy supply 151 is either larger in value or smaller in value when compared to the terminal voltage of the load as long as the terminal voltage of the HTRES 402 is smaller in value than both.

The power converters may generally be of any topology. Non-limiting examples include converters commonly referred to as "buck," "boost," "buck-boost," "flyback," "forward," "switched capacitor," and other isolated versions of non-isolated converters (e.g., Cuk, buck-boost), as well as cascades of any such converters (e.g., buck+boost).

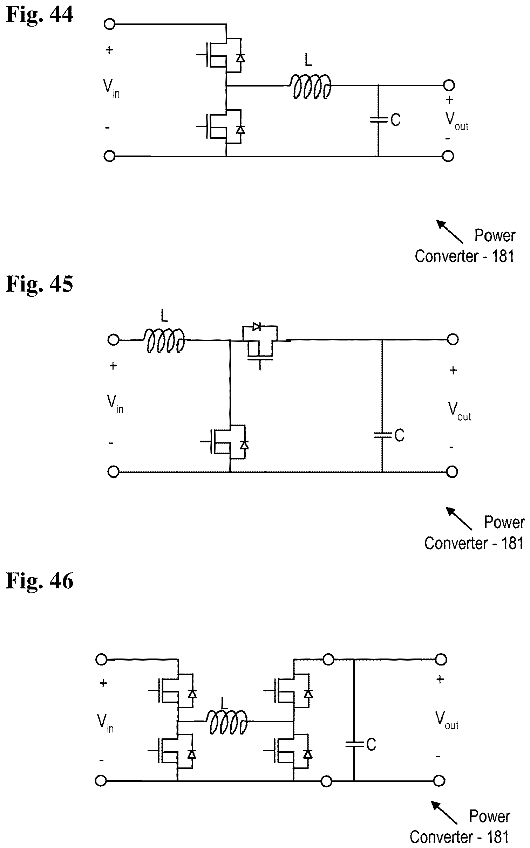

An exemplary converter 181 is shown in FIG. 44. In this example, the converter 181 is a bi-directional buck converter. This embodiment is suitable for, among other things, use as a power converter when the output voltage is required to be less than the input voltage.

Another exemplary converter 181 is shown in FIG. 45. In this example, the converter 181 is a bi-directional boost converter. A further exemplary converter 181 is shown in FIG. 46. In this example, the converter 181 is a merged bi-directional buck-boost converter.

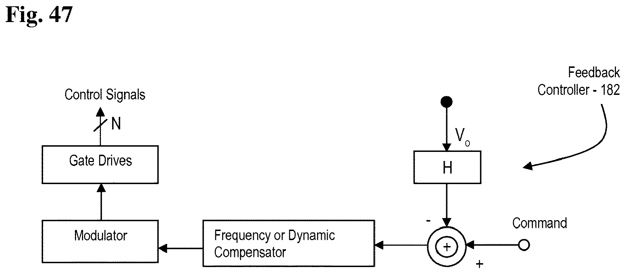

An exemplary embodiment of the feedback controller 182 is provided in FIG. 47. The components shown therein may be implemented in analog or digital domains, or in a combination, as determined appropriate by a designer, manufacturer or user. The feedback controller 182 may include elements for monitoring and controlling various properties. For example, the feedback controller 182 may include components for frequency compensation, pulse width modulation, deadtime protection, duty cycle limiting, providing for a soft start (i.e., ramping voltage) and the like.

One skilled in the art will recognize that the power supply 115 may be used in conjunction with technologies and instrumentation in support of resistivity, nuclear including pulsed neutron and gamma measuring as well as others, magnetic resonance imaging, acoustic, and/or seismic measurements, various sampling protocols, communications, data processing and storage, geo-steering and a myriad of other requirements for power use downhole. A great compliment of components may also be powered by the power supply 115. Non-limiting examples include accelerometers, magnetometers, sensors, transducers, digital and/or analog devices (including those listed below) and the like.

Accordingly, it may be appropriate to account for the magnetic fields created by the at least one EG 210. Interference between the permanent magnet(s) 101 and magnetically sensitive components may be reduced or substantially eliminated if sensitive components are placed remotely from the EG 210 in the logging instrument 100. If needed, a barrier of high magnetic permeability material ("µ-metal" or mu-metal) commercially available as a low-cost alloy of nickel iron copper and molybdenum can be placed between the sensitive device(s) and the magnetic fields associated with the power supply 115.

Mu metal may be disposed between the power supply 115 or any other generator (rotary or vibrational or otherwise) and other instruments, such as those sensitive to magnetic interference (e.g., a magnetometer, NMR, magnetic sensitive memory, or otherwise).

Further, mu metal may be disposed between the formations 103 and sensitive instruments (e.g., electronics 113). Mu metal may be shaped in many ways. For example, mu metal may appear as a flat plane separating at least two pieces of the tool, a shaped surface, a closed surface wrapped around at least one piece of the tool such as an instrument or a generator, several layers of mu metal to improve isolation, combinations of the above.

In general, "mu metal" as discussed herein is a nickel-iron alloy (approximately 75% nickel, 15% iron, plus copper and molybdenum) that has very high magnetic permeability. The high permeability makes mu-metal very effective at screening static or low-frequency magnetic fields, which cannot be attenuated by other methods. Mu-metal can have relative permeabilities of 80,000-100,000 compared to several thousand for ordinary steel. In addition it has low coercivity and magnetostriction resulting in low hysteresis loss. Other high permeability alloys such as permalloy have similar magnetic properties. Other advantages include mu-metal is more ductile and workable that ordinary steel. In short, as used herein, the term "mu metal" refers to any material exhibit desired magnetic properties, such as very high magnetic permeability.

It should be recognized that the teachings herein are merely illustrative and are not limiting of the invention. Further, one skilled in the art will recognize that additional components, configurations, arrangements and the like may be realized while remaining within the scope of this invention. For example, configurations of layers, electrodes, leads, terminals, contacts, feed-throughs, caps and the like may be varied from embodiments disclosed herein. Generally, design and/or application of components of the ultracapacitor and ultracapacitors making use of the electrodes are limited only by the needs of a system designer, manufacturer, operator and/or user and demands presented in any particular situation.

In support of the teachings herein, various analysis components may be used, including a digital system and/or an analog system. The system(s) may have components such as a processor, storage media, memory, input, output, communications link (wired, wireless, pulsed mud, optical or other), user interfaces, software and firmware programs, signal processors (digital or analog) and other such components (such as resistors, capacitors, inductors and others) to provide for operation and analyses of the apparatus and methods disclosed herein in any of several manners well-appreciated in the art. It is considered that these teachings may be, but need not be, implemented in conjunction with a set of computer executable instructions stored on a computer readable medium, including memory (ROMs, RAMs), optical (CD-ROMs), or magnetic (disks, hard drives), or any other type that when executed causes a computer to implement the method of the present invention. These instructions may provide for equipment operation, control, data collection and analysis and other functions deemed relevant by a system designer, owner, user or other such personnel, in addition to the functions described in this disclosure.

Further, various other components may be included and called upon for providing for aspects of the teachings herein. For example, additional materials, combinations of materials and/or omission of materials may be used to provide for added embodiments that are within the scope of the teachings herein.

When introducing elements of the present invention or the embodiment(s) thereof, the articles "a," "an," and "the" are intended to mean that there are one or more of the elements. Similarly, the adjective "another," when used to introduce an element, is intended to mean one or more elements. The terms "including" and "having" are intended to be inclusive such that there may be additional elements other than the listed elements.

In the present application a variety of variables are described, including but not limited to components (e.g. electrode materials, electrolytes, etc.), conditions (e.g., temperature, freedom from various impurities at various levels), and performance characteristics (e.g., post-cycling capacity as compared with initial capacity, low leakage current, etc.). It is to be understood that any combination of any of these variables can define an embodiment of the invention. For example, a combination of a particular electrode material, with a particular electrolyte, under a particular temperature range and with impurity less than a particular amount, operating with post-cycling capacity and leakage current of particular values, where those variables are included as possibilities but the specific combination might not be expressly stated, is an embodiment of the invention. Other combinations of articles, components, conditions, and/or methods can also be specifically selected from among variables listed herein to define other embodiments, as would be apparent to those of ordinary skill in the art.

While the invention has been described with reference to exemplary embodiments, it will be understood by those skilled in the art that various changes may be made and equivalents may be substituted for elements thereof without departing from the scope of the invention. In addition, many modifications will be appreciated by those skilled in the art to adapt a particular instrument, situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A power supply adapted for supplying power to a downhole tool, the power supply comprising:
an energy source coupled to a rechargeable energy storage that is configured to operate at a temperature within a temperature range between about 80 degrees Celsius to about 210 degrees Celsius and a control circuit for receiving electrical energy from the energy source and storing the electrical energy in the rechargeable energy storage;
wherein the energy source comprises at least one of a battery, a connection to an external supply of electrical energy and a generator that is configured for translating energy experienced by the downhole tool into the electrical energy;
wherein a housing for housing at least one pair of electrodes and an electrolyte of the rechargeable energy storage comprises a barrier disposed over a substantial portion of interior surfaces of the housing; and
wherein a total water content and a total concentration of impurities in electrolyte of the energy storage are less than 500 parts per million and less than 1,000 parts per million, respectively.

2. The power supply of claim 1, wherein the barrier comprises a material that is at least one of an electrical insulator and chemically inert.

3. The power supply of any preceding claim, wherein the barrier comprises at least one of polytetrafluoroethylene (PTFE), perfluoroalkoxy (PFA), fluorinated ethylene propylene (FEP), and ethylene tetrafluoroethylene (ETFE).

4. The power supply of any preceding claim, wherein the barrier comprises a ceramic material.

5. The power supply of any preceding claim, wherein the barrier comprises a polymer material.

6. The power supply of any preceding claim, wherein the barrier comprises multiple layers of materials.

7. The power supply of any preceding claim, wherein the housing comprises a multilayer material.

8. The power supply of claim 7, wherein the multilayer material comprises a first material clad onto a second material.

9. The power supply of claim 7 or claim 8, wherein the multilayer material comprises aluminum.

10. The power supply of any preceding claim, wherein the barrier comprises a mixture.

11. The power supply of any preceding claim wherein the rechargeable energy storage comprises an energy storage cell disposed within an envelope.

12. The power supply of claim 11, wherein the barrier comprises a coating on the housing disposed within the interior of the housing in selected areas where the envelope may be at least partially compromised.

13. The power supply of claim 12, wherein at least one of the selected areas where the envelope may be at least partially compromised corresponds to a location of a terminal of the rechargeable energy storage.
